(19) Europäisches Patentamt
European Patent Office
Office européen des brevets

(11) **EP 3 303 076 B1**

(12) **EUROPÄISCHE PATENTSCHRIFT**

(45) Veröffentlichungstag und Bekanntmachung des Hinweises auf die Patenterteilung:
**07.10.2020   Patentblatt 2020/41**

(21) Anmeldenummer: **16726785.5**

(22) Anmeldetag: **12.05.2016**

(51) Int Cl.:
**B60T 8/17** *(2006.01)*          **B60T 8/1766** *(2006.01)*

(86) Internationale Anmeldenummer:
**PCT/EP2016/000771**

(87) Internationale Veröffentlichungsnummer:
**WO 2016/188612 (01.12.2016 Gazette 2016/48)**

(54) **VERFAHREN UND VORRICHTUNG ZUM ELEKTRONISCHEN REGELN EINER FAHRZEUGVERZÖGERUNG IN EINEM ABS-BREMSSYSTEM**

METHOD AND DEVICE FOR ELECTRONICALLY CONTROLLING A VEHICLE DECELERATION IN AN ABS BRAKING SYSTEM

PROCÉDÉ ET DISPOSITIF DE RÉGULATION ÉLECTRONIQUE D'UN SYSTÈME DE RALENTISSEMENT DE VÉHICULE DANS UN SYSTÈME DE FREINAGE ABS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.05.2015   DE 102015006737**

(43) Veröffentlichungstag der Anmeldung:
**11.04.2018   Patentblatt 2018/15**

(73) Patentinhaber: WABCO GmbH
**30453 Hannover (DE)**

(72) Erfinder:
• BOETHEL, Andreas
  31177 Harsum (DE)
• ECKERT, Horst
  31547 Rehburg-Loccum (DE)
• WALLBAUM, Torsten
  31089 Duingen (DE)

(56) Entgegenhaltungen:
DE-A1-102006 045 317     DE-A1-102009 021 685
DE-B3-102011 017 018     DE-B4-102011 118 130
US-A1- 2009 134 698

**Beschreibung**

Die Erfindung betrifft ein Verfahren zum elektronischen Regeln einer Fahrzeugverzögerung in einem ABS-Bremssystem, insbesondere in einem Nutzfahrzeug, durch Einstellen von Bremsdrücken an einer ersten und an einer zweiten zu regelnden Fahrzeugachse in Abhängigkeit einer aktuellen Fahrzeug-Ist-Verzögerung und eines erfassten Ist-Differenzschlupfes sowie eine Vorrichtung zur Durchführung des Verfahrens.

In Nutzfahrzeugen dient eine Bremsdruckregelung, die den Bremsdruck limitiert (electronic brake force limiter, EBL) insbesondere dazu, die von einem Bremssystem bzw. einem Fahrer gewünschte Bremswirkung in geeigneter Weise auf die Fahrzeugachsen zu verteilen, so dass das Fahrzeug entsprechend einem von einem Fahrer vorgegebenen Fahrerwillen bzw. einer Fahrzeug-Soll-Verzögerung verzögert wird und gleichzeitig in Abhängigkeit der Fahrsituation stabil bleibt. Denn bei einer starken Bremsung, d. h. bei einer hohen Fahrzeug-Soll-Verzögerung wird das Fahrzeuggewicht auf die Vorderachse verlagert, so dass Hinterräder an der Hinterachse weniger stark auf den Untergrund gedrückt werden, wodurch ein Blockieren der Hinterräder unterstützt wird.

Durch Limitieren des Bremsdruckes an Radbremsen der Hinterräder kann bei einer Bremsung ein frühzeitiges Blockieren der Hinterräder vermieden werden. Die Limitierung des Bremsdruckes kann in Abhängigkeit einer Achslast erfolgen, da bei Fahrzeugen, die schwer beladen sind, über die Hinterachse mehr Bremskraft auf die Straße gebracht werden kann als bei unbeladenen Fahrzeugen, bei denen eine zu starke Bremsung der Hinterräder den oben beschriebenen Effekt noch verstärkt; die Blockierneigung der Hinterräder steigt.

Zur Messung der Beladung bei blattgefederten Fahrzeugen kann ein mechanischer Wegsensor vorgesehen sein, der je nach Beladung stärker oder schwächer ausgelenkt wird. Bei luftgefederten Fahrzeugen kann dazu ein Drucksensor, der den Druck in einem Tragbalg misst, verwendet werden. In Abhängigkeit des beladungsabhängigen Messsignals kann auf das Gewicht geschlossen und in Abhängigkeit davon eine Limitierung des Bremsdruckes vorgenommen werden.

In Fahrzeugen ohne einen derartigen mechanischen Wegsensor oder Drucksensor, in denen keine direkte Messung der Beladung vorgesehen ist, kann eine elektronische Bremsdrucklimitierung vorgesehen sein. Dabei wird in Abhängigkeit eines Unterschiedes zwischen einer Raddrehgeschwindigkeit der Vorderräder und der Raddrehgeschwindigkeit der Hinterräder oder in Abhängigkeit des Unterschiedes zwischen einem Bremsschlupf der Vorderräder und dem Bremsschlupf der Hinterräder eine Regelung des Bremsdruckes an den Radbremsen der Hinterräder vorgenommen. Da der Unterschied in den Raddrehgeschwindigkeiten bzw. dem Bremsschlüpfen beladungsabhängig ist, wird der Bremsdruck entsprechend auf die Fahrzeugachsen verteilt, um zu verhindern, dass die Räder der Hinterachse frühzeitig eine Blockierneigung zeigen und um das Fahrzeug wie gewollt zu verzögern.

Die DE 10 2008 009 948 B3 offenbart eine elektronische Bremsdruckregelung, bei der der Bremsdruck an den Radbremsen in Abhängigkeit eines Achslastsensors und der Fahrzeug-Soll-Verzögerung gesteuert wird. Bei Ausfall des Achslastsensors erfolgt eine Regelung des Bremsdruckes in Abhängigkeit des Unterschieds der Bremsschlüpfe an den Fahrzeugachsen, d. h. in Abhängigkeit eines gemessenen Ist-Differenzschlupfes.

DE 10 2011 118 130 B4 offenbart ebenfalls eine elektronische Bremsdruckregelung, bei der die Bremskräfte in Abhängigkeit eines ermittelten Ist-Differenzschlupfes oder einer ermittelten Differenzgeschwindigkeit der Räder auf die Fahrzeugachsen verteilt wird, um das Fahrzeug wie gewollt zu verzögern. Dabei wird der Bremsdruck an den Radbremsen der Hinterräder bei Überschreiten des Ist-Differenzschlupf über einen Soll-Differenzschlupf begrenzt. Der Soll-Differenzschlupf ist dabei abhängig von der Fahrzeug-Soll-Verzögerung, wobei der Soll-Differenzschlupf bei höheren Fahrzeug-Soll-Verzögerungen ansteigt, um einen feinfühligeren Übergang zu einer ABS-Regelung zu gewährleisten, die in dem Fall eher eingreift als bei einem konstant verlaufenden Soll-Bremsschlupf.

Nachteilig dabei ist, dass ein Erhöhen des Soll-Differenzschlupfes bei hoher Fahrzeug-Soll-Verzögerung ein frühes Ansteuern der ABS-Regelung bewirkt, wodurch das Bremsverhalten unruhiger und unsicherer wird, da die ABS-Regelung früher eingreifen muss.

In der DE 10 2006 045 317 A1 ist eine elektronische Bremskraftverteilung offenbart, bei der die Bremskräfte statt in Abhängigkeit des Differenzschlupfes in Abhängigkeit der Fahrzeugverzögerung auf die Fahrzeugachsen verteilt werden. Dazu ist vorgesehen, eine Fahrzeug-Ist-Verzögerung zu messen und bei Erreichen einer Maximalverzögerung, d. h. eines bestimmten Schwellenwertes für die Fahrzeug-Ist-Verzögerung den Bremsdruck an der Hinterachse zu regeln. Die Maximalverzögerung ist hierbei derartig definiert, dass ab diesem Wert die Hinterräder eher dazu neigen zu blockieren als die Vorderräder. Somit wird eine Blockierneigung der Hinterräder an die Blockierneigung der Vorderräder angepasst.

Nach Überschreiten der Maximalverzögerung ist vorgesehen, den Bremsdruck an den Radbremsen der Hinterräder geregelt aufzubauen, wobei der Gradient niedriger ist als der Gradient des sich aufbauenden Bremsdruckes an den Radbremsen der Vorderräder. Dadurch wird der Bremsdruck an den Radbremsen der Hinterachse dem Bremsdruck an den Radbremsen der Vorderräder nachgeführt, d. h. um einen bestimmten Wert geringer gehalten.

Nachteilig hierbei ist, dass oberhalb der Maximalverzögerung das Bremsverhalten durch das Nachregeln insgesamt unruhig wirkt und als unangenehm empfunden wird.

Die US2009/0134698A1 offenbart ein Verfahren zur Bremsdruckverteilung auf die Achsen eines Fahrzeugs mit Druckmittelbremsen, wobei auf der Basis der Abhängigkeit zwischen wenigstens dem Bremsdruck an der Hinterachse und der Fahrzeugverzögerung nach wenigstens zwei vorangehenden Betriebsbremsungen durch Interpolation oder Extrapolation ein kritischer Verzögerungswert ermittelt wird, bei welchem wenigstens der Bremsdruck an der Hinterachse kleiner als ein vorgegebener Bremsdruckgrenzwert ist und die zwischenachsige Bremsdruckverteilung nach Maßgabe einer Differenz zwischenachsiger Raddrehzahlen oder Radschlupfwerte an den Achsen geregelt wird.

Die DE 10 2009 021 685 A1 betrifft ein Verfahren zum Steuern eines Bremssystems eines Fahrzeugs, wobei zumindest während einer Beschleunigungsphase des Fahrzeugs eine Differenzschlupf-Antriebskraft-Korrelationsgröße und während der Bremsbetätigungsphase eine Dauerbremskraft-Größe bestimmt wird.

Die DE 10 2011 017 018 B3 betrifft ein Verfahren zur lastabhängigen Bremsdruckregelung eines Fahrzeugkombination aus Zug- und Anhängefahrzeug.

Es ist daher Aufgabe der Erfindung, ein Verfahren und eine Vorrichtung zum elektronischen Regeln einer Fahrzeugverzögerung in einem ABS-Bremssystem bereitzustellen, das eine angenehme und sichere Bremsung mit einem ruhigen Bremsverhalten gewährleistet.

Diese Aufgabe wird durch ein Verfahren nach Anspruch 1 sowie eine Vorrichtung zur Durchführung des Verfahrens nach Anspruch 16 gelöst. Bevorzugte Weiterbildungen sind in den Unteransprüchen angegeben.

Erfindungsgemäß ist demnach vorgesehen, einen Bremsdruck an Radbremsen einer ersten Fahrzeugachse, beispielsweise einer Vorderachse eines Fahrzeuges, und einer zweiten Fahrzeugachse, z.B. einer Hinterachse des Fahrzeuges, in Abhängigkeit einer erfassten Fahrzeug-Ist-Verzögerung, d. h. einer negativen Ist-Beschleunigung des Fahrzeuges zu regeln, wobei der Bremsdruck an den Radbremsen der ersten und der zweiten Fahrzeugachse limitiert wird, wenn die Fahrzeug-Ist-Verzögerung größer ist als eine Maximalverzögerung und der Bremsdruck an den Radbremsen der ersten und der zweiten Fahrzeugachse erhöht wird, wenn die Fahrzeug-Ist-Verzögerung kleiner ist als eine Minimalverzögerung. Unter Limitieren wird hierbei verstanden, dass der Bremsdruck an den Radbremsen der beiden zu regelnden Fahrzeugachsen nicht weiter erhöht werden darf, d. h. der Bremsdruck kann auf dem aktuellen Wert gehalten werden oder je nach Fahrerwunsch auch auf einen niedrigeren Wert abgesenkt werden.

Weiterhin ist erfindungsgemäß vorgesehen, dass der Bremsdruck an den Radbremsen der zweiten Fahrzeugachse zusätzlich in Abhängigkeit eines erfassten Ist-Differenzschlupfes geregelt wird, falls die Fahrzeug-Ist-Verzögerung kleiner als die Maximalverzögerung und größer als die Minimalverzögerung ist, wobei der Ist-Differenzschlupf einen Unterschied zwischen einem aktuellen Drehverhalten der zweiten Fahrzeugachse und einer weiteren Fahrzeugachse, beispielsweise der ersten Fahrzeugachse, angibt.

Somit wird erfindungsgemäß ein Verfahren zum Regeln der Fahrzeugverzögerung (Fahrzeugverzögerungsregelung) durch Einstellen der Bremsdrücke an den Radbremsen der ersten und der zweiten Fahrzeugachse bereitgestellt, wobei in die erste und die zweite Fahrzeugachse unter Berücksichtigung der Maximal- und der Minimalverzögerung regelnd eingegriffen wird, und in die zweite Fahrzeugachse zusätzlich unter Berücksichtigung des Ist-Differenzschlupfes. Dadurch kann vorteilhafterweise das Regelungsverhalten im Fahrzeug beruhigt werden, da nach Erreichen der Maximalverzögerung weitere Regelungseingriffe beispielsweise durch die Differenzschlupfregelung unterbunden werden.

Die Fahrzeug-Ist-Verzögerung wird hierbei beispielsweise durch einen Beschleunigungssensor oder aus der Ableitung einer über Raddrehzahlsensoren bestimmten Fahrzeugreferenzgeschwindigkeit bestimmt. Dabei kann berücksichtigt werden, ob das Fahrzeug bereits ohne eine Betätigung der Bremsen verzögert wird, beispielsweise durch Roll- und Luftwiderstände, eine Fahrbahnneigung oder eine Dauerbremse im Fahrzeug. In diesem Fall wird dem Verfahren eine Differenz aus gemessener Fahrzeug-Ist-Verzögerung und einer entsprechenden Offset-Fahrzeug-Verzögerung zugrunde gelegt.

Die Maximalverzögerung und die Minimalverzögerung sind insbesondere abhängig von einer durch den Fahrer vorgegebenen Fahrzeug-Soll-Verzögerung, so dass sich eine Maximalverzögerungs-Kennlinie und eine Minimalverzögerungs-Kennlinie ergeben. Die Fahrzeug-Soll-Verzögerung kann hierbei beispielsweise durch einen Bremswertgeber bestimmt werden, d. h. einen Wegsensor, der einen Betätigungsweg eines Bremsventils oder eines Bremspedals durch den Fahrer erfasst, oder einen Drucksensor, der einen vom Fahrer mit einem Bremsventil ausgesteuerten Bremsdruck erfasst. Aus den Kennlinien wird bei einer erfassten Fahrzeug-Soll-Verzögerung der Wert der Maximalverzögerung bzw. der Minimalverzögerung bestimmt und der folgenden Fahrzeugverzögerungsregelung zugrunde gelegt. Die Maximalverzögerungs-Kennlinie verläuft hierbei in Abhängigkeit der Fahrzeug-Soll-Verzögerung beispielsweise konstant oder vorteilhafterweise harmonisch, d. h. gleichmäßig ansteigend ohne Abstufungen.

Dadurch kann vorteilhaferweise ein angenehmes Bremsgefühl und eine verbesserte Stufbarkeit erreicht werden. Denn durch die Limitierung des Bremsdruckes an den Radbremsen der ersten und zweiten Fahrzeugachse auf die in Abhängigkeit der Fahrzeug-Soll-Verzögerung harmonisch verlaufende Maximalverzögerungs-Kennlinie, die auch als Feeling-Kurve bezeichnet wird, wird die Bremskraft auf den beiden zu regelnden Fahrzeugachsen derartig begrenzt, dass eine daraus resultierende Fahrzeug-Ist-Verzögerung vom Fahrer als angenehm empfunden wird. Der Verlauf der Feeling-Kurve erlaubt zudem eine verbesserte Stufbarkeit, da der Bremsdruck in Abhängigkeit der Fahrzeug-Soll-Verzögerung, d. h. des Fahrerwillens feinfühliger geregelt werden kann.

Ist die Fahrzeug-Ist-Verzögerung größer oder gleich der Maximalverzögerung und erhöht der Fahrer durch eine zusätzliche Betätigung des Bremspedals bzw. eines Bremsventils die Fahrzeug-Soll-Verzögerung, d. h. es liegt ein Einbremsvorgang vor, wird eine stärkere Verzögerung des Fahrzeuges lediglich dann bewirkt, wenn eine weitere, nicht durch das Verfahren geregelte Fahrzeugachse vorhanden ist, deren Radbremsen dann entsprechend angesteuert werden, es sei denn, die Fahrzeug-Ist-Verzögerung wird aufgrund dessen wieder geringer als die Maximalverzögerung. Ist die Fahrzeug-Ist-Verzögerung größer oder gleich der Maximalverzögerung und verringert der Fahrer beispielsweise durch ein Lösen des Bremspedals die Fahrzeug-Soll-Verzögerung, d. h. es liegt ein Ausbremsvorgang vor, kann der Bremsdruck vorteilhafterweise auch verringert werden, um die Fahrzeug-Ist-Verzögerung schneller auf Maximalverzögerung zu regeln.

Die Maximalverzögerung ist in Abhängigkeit der Fahrzeug-Soll-Verzögerung insbesondere derartig festgelegt, dass eine quasi unnötige Bremsung durch die beiden zu regelnden Fahrzeugachsen vermieden werden kann, indem der Bremsdruck dieser Fahrzeugachsen auf einen Wert begrenzt wird, der zur Abbremsung des Fahrzeuges gemäß der vom Fahrer vorgegebenen Fahrzeug-Soll-Verzögerung maximal benötigt wird. Dabei wird insbesondere berücksichtigt, welche Bremswirkung durch die möglicherweise weiteren im Fahrzeug vorhandenen, nicht geregelten Fahrzeugachsen erreicht werden kann.

Vorzugsweise ist die Maximalverzögerungs-Kennlinie um eine obere und eine untere Toleranz verbreitert, um vorteilhafterweise eine minimale Ansteuerzeit bzw. Pulsdauer der Bremsventile im Bremssystem zu berücksichtigen. Denn die Auflösung zur Regelung der Bremsdrücke bzw. zur Regelung der Fahrzeug-Ist-Verzögerung auf die Maximalverzögerungs-Kennlinie ist durch die Ansteuerzeit der Bremsventile begrenzt.

Um auch bei unterschiedlichen Beladungszuständen des Fahrzeuges eine angenehme und sichere Bremsung zu gewährleisten, ist die Maximalverzögerung in Abhängigkeit der Fahrzeug-Soll-Verzögerung vorzugsweise beladungsabhängig. Demnach verläuft die Maximalverzögerungs-Kennlinie bei einer hohen Beladung flacher und bei einer geringen Beladung steiler, d. h. stärker ansteigend, so dass der Bremsdruck an den Radbremsen der beiden zu regelnden Fahrzeugachsen bei hoher Beladung bereits bei einer niedrigeren Fahrzeug-Ist-Verzögerung gehalten wird als bei einer geringeren Beladung. Dadurch kann vorteilhafterweise erreicht werden, dass dem Fahrer durch die ausgesteuerte Bremswirkung der Beladungszustand des Fahrzeuges vermittelt wird, denn bei einer geringen Beladung wird das Fahrzeug bei gleicher Fahrzeug-Soll-Verzögerung stärker verzögert als bei einer hohen Beladung.

Ist die Fahrzeug-Ist-Verzögerung kleiner als die Minimalverzögerung wird vorteilhafterweise eine Bremskraftlimitierung an den beiden zu regelnden Fahrzeugachsen beendet bzw. gesperrt, um sicherzustellen, dass eine Mindestverzögerung nicht unterbunden wird, beispielsweise, um Anforderungen bezüglich einer gesetzlich geforderten Mindest-Bremswirkung in Abhängigkeit der Fahrzeug-Soll-Verzögerung zu genügen; die Sicherheit steigt.

Der Bremsdruck an den beiden zu regelnden Fahrzeugachsen kann durch die erfindungsgemäße Fahrzeugverzögerungsregelung sowohl erhöht als auch gehalten werden, wenn die Fahrzeug-Ist-Verzögerung kleiner als die Maximalverzögerung und größer als die Minimalverzögerung ist. An der ersten Fahrzeugachse kann der Bremsdruck zusätzlich auch gesenkt werden.

Vorzugsweise wird in diesem Bereich bei einem Einbremsvorgang der Bremsdruck an den Radbremsen der ersten Fahrzeugachse lediglich gehalten oder erhöht und bei einem Ausbremsvorgang lediglich gehalten oder gesenkt, um vorteilhafterweise eine Beruhigung des Fahrzeuges mit nur wenigen Regelungseingriffen zu erreichen. Unter Einbremsvorgang wird dabei verstanden, dass die Fahrzeug-Ist-Verzögerung steigt und unter Ausbremsvorgang, dass die Fahrzeug-Ist-Verzögerung fällt.

Zusätzlich kann vorgesehen sein, dass der Bremsdruck bei einem Einbremsvorgang lediglich dann gehalten oder erhöht wird, wenn auch der Fahrer durch eine stärkere Betätigung des Bremspedals oder des Bremsventils die Fahrzeug-Soll-Verzögerung erhöht und bei einem Ausbremsvorgang lediglich gehalten oder gesenkt, wenn auch der Fahrer das Bremspedal löst und die Fahrzeug-Soll-Verzögerung somit aktiv senkt. Dies wirkt sich positiv auf das Bremsgefühl des Fahrers aus, da er bei einer Betätigung des Bremspedals eine korrespondierende Antwort vom Fahrzeug erhält und die Anpassung des Bremsdruckes nicht auch dann durchgeführt wird, wenn die Fahrzeug-Ist-Verzögerung beispielsweise durch eine sich verändernde Steigung steigt oder fällt. Zusätzlich kann auch vorgesehen sein, ein anfängliches Überbremsen bei einem Einbremsvorgang durch ein Drucksenken und ein anfängliches Unterbremsen bei einem Ausbremsvorgang durch ein Erhöhen des Druckes auszugleichen.

Um die Stufbarkeit zu verbessern, kann bei einem Übergang von einem Einbremsvorgang in einen Ausbremsvorgang oder einem Ausbremsvorgang in einen Einbremsvorgang eine Zeitspanne zum Senken bzw. Erhöhen der Bremsdrücke an den Radbremsen der beiden zu regelnden Fahrzeugachsen verlängert werden, um insbesondere ein Hystereseverhalten bei der Richtungsumkehr der Bremswirkung an den Radbremsen zu überwinden.

Insbesondere in dem Bereich zwischen der Maximalverzögerung und der Minimalverzögerung erfolgt die erfindungsgemäße Regelung der Fahrzeugverzögerung zusätzlich in Abhängigkeit des Differenzschlupfes (Differenzschlupfregelung, DSR) vorzugsweise zwischen der ersten und der zweiten Fahrzeugachse, indem der Bremsdruck an der zweiten Fahrzeugachse entsprechend eingestellt wird.

Dazu wird ein Ist-Differenzschlupf bestimmt, d. h. ein Unterschied zwischen einem aktuellen Drehverhalten der zweiten Fahrzeugachse, beispielsweise der Hinterachse, und der ersten Fahrzeugachse, beispielsweise der Vorderachse. Das Drehverhalten wird durch einen Bremsschlupf oder eine Drehgeschwindigkeit der Räder der entsprechenden Fahrzeugachse charakterisiert. Der Ist-Differenzschlupf gibt also an, wie stark die zweite Fahrzeugachse in Relation zur ersten Fahrzeugachse überbremst oder unterbremst ist. Als Überbremsen wird hierbei verstanden, dass sich die zweite Fahrzeugachse relativ zu der ersten Fahrzeugachse langsamer dreht, d. h. insbesondere einen höheren Bremsschlupf aufweist, während bei einem Unterbremsen, die zweite Fahrzeugachse einen geringeren Bremsschlupf aufweist als die erste Fahrzeugachse, d. h. schneller dreht.

Vorzugsweise ist der Ist-Differenzschlupf proportional zu einer Differenz aus dem Bremsschlupf der durch einen Motor angetriebenen Hinterachse minus dem Bremsschlupf der Vorderachse, vorzugsweise normiert auf den Bremsschlupf der angetriebenen Hinterachse. Die Berechnungsmethode ist allerdings nicht darauf beschränkt; beispielsweise kann der Ist-Differenzschlupf auch in Abhängigkeit der Drehgeschwindigkeit der Fahrzeugachsen bestimmt werden aus der Differenz aus der Drehgeschwindigkeit der Vorderachse minus der Drehgeschwindigkeit der angetriebenen Hinterachse, vorzugsweise normiert auf die Drehgeschwindigkeit der Vorderachse. Auch andere Berechnungsmethoden sind denkbar.

Die Differenzschlupfregelung regelt den Ist-Differenzschlupf auf einen Soll-Differenzschlupf, indem der Bremsdruck an der zweiten Fahrzeugachse limitiert, d. h. vorzugsweise gehalten wird, um ein Überbremsen zu vermeiden, und erhöht wird, um ein Unterbremsen der zweiten Fahrzeugachse zu vermeiden; die Blockierneigung der zweiten Fahrzeugachse wird somit an die Blockierneigung der ersten Fahrzeugachse angeglichen. Dazu werden der Ist-Differenzschlupf und der Soll-Differenzschlupf verglichen und der Bremsdruck an der zweiten Fahrzeugachse bei einem Abweichen entsprechend eingestellt. Dazu kann bei ungetakteten Bremsventilen vorteilhafterweise eine Toleranz oberhalb und/oder unterhalb des Soll-Differenzschlupfes vorgesehen sein, um das Regelverhalten zu beruhigen.

Die Differenzschlupfregelung unterliegt hierbei auch der Vorgabe, dass der Bremsdruck an den Radbremsen der zweiten Fahrzeugachse limitiert wird, wenn die Fahrzeug-Ist-Verzögerung größer ist als die Maximalverzögerung, z.B. aufgrund der Differenzschlupfregelung, und erhöht wird, wenn sie kleiner ist als die Minimalverzögerung. Im Fall, dass die Fahrzeug-Ist-Verzögerung kleiner ist als die Minimalverzögerung, wird die Differenzschlupfregelung gepulst abgebrochen; eine Regelung in Abhängigkeit des Ist-Differenzschlupfes ist dann aus Sicherheitsgründen nicht mehr erlaubt. Eine Limitierung des Bremsdruckes bei Überschreiten der Maximalverzögerung durch die Fahrzeug-Ist-Verzögerung dient vorteilhafterweise einer Beruhigung des Verzögerungsverlaufes, denn es erfolgen weniger Regelungseingriffe. Dies ist insbesondere dann der Fall, wenn der Bremsdruck im Rahmen der Limitierung auch nicht gesenkt wird, d. h. durch die Regelung gehalten wird.

Vorteilhafterweise kann jedoch der Bremsdruck an der zweiten Fahrzeugachse durch die Differenzschlupfregelung auch verringert werden, wenn die Fahrzeug-Ist-Verzögerung größer als die Maximalverzögerung ist und die zweite Fahrzeugachse überbremst ist. Hierdurch sinkt die Fahrzeug-Ist-Verzögerung vorteilhafterweise schneller auf die Maximalverzögerung und die Überbremsung der zweiten Fahrzeugachse nimmt gleichzeitig ab; weiterhin steigen die Sicherheit und der Bremskomfort.

Somit findet durch das erfindungsgemäße Verfahren vorteilhafterweise eine Regelung der Fahrzeugverzögerung auf die Maximalverzögerungs-Kennlinie statt, wodurch eine angenehme Bremswirkung erreicht werden kann und gleichzeitig eine Anpassung der Bremsschlüpfe beider Achsen aneinander, so dass der Fahrkomfort sowie die Sicherheit steigen.

Der Soll-Differenzschlupf, auf den die Differenzschlupfregelung den Ist-Differenzschlupf regelt, kann beispielsweise konstant sein und zu Beginn einer Bremsung, d. h. wenn noch keine Bremskräfte wirken, bestimmt werden, um einen Offset-Differenzschlupf zu erhalten, der ein Motorschleppmoment, einen Verschleiß der Räder und ggf. Fahrbahneigenschaften berücksichtigt. Im Fall der oben genannten Berechnungsmethode ist der Offset-Differenzschlupf dabei größer als Null, da die angetriebene Hinterachse durch ein Motorschleppmoment langsamer dreht als die mitlaufende Vorderachse.

Vorteilhafterweise kann der Soll-Differenzschlupf zusätzlich auch abhängig von der Fahrzeug-Ist-Verzögerung oder der Fahrzeug-Soll-Verzögerung sein. Beispielsweise kann der Soll-Differenzschlupf bei steigender Fahrzeug-Ist-Verzögerung bzw. Fahrzeug-Soll-Verzögerung derartig vom Offset-Differenzschlupf in Richtung Null, d. h. in Richtung eines synchronen Raddrehverhaltens der Räder der ersten und der zweiten Fahrzeugachse abfallen, dass für den Fall, dass die zweite Fahrzeugachse die Hinterachse und die erste Fahrzeugachse die Vorderachse ist einem Blockieren der beladbaren Hinterachse entgegengewirkt wird. Ist hierbei der nach obiger Berechnungsmethode bestimmte Ist-Differenzschlupf größer als der Soll-Differenzschlupf, ist die Hinterachse relativ zur Vorderachse überbremst, d. h. der Hinterachs-Bremsdruck wird limitiert. Ist der Ist-Differenzschlupf hingegen kleiner als der Soll-Differenzschlupf, ist die Hinterachse relativ zur Vorderachse unterbremst, d. h. der Hinterachs-Bremsdruck wird erhöht. Somit wird der Hinterachs-Bremsdruck aufgrund des mit steigender Fahrzeug-Ist-Verzögerung bzw. Fahrzeug-Soll-Verzögerung abfallenden Soll-Differenzschlupfes bereits bei geringerem Ist-Differenzschlupf, d. h. bei einem geringeren relativen Überbremsen limitiert.

Dadurch wird vorteilhafterweise berücksichtigt, dass bei hoher Fahrzeug-Ist-Verzögerung oder hoher Fahrzeug-Soll-Verzögerung die beladbare Hinterachse tendenziell eher schlüpft, d. h. überbremst ist und somit nach obiger Berechnungsmethode ein tendenziell höherer Ist-Differenzschlupf vorliegt, was im unbeladenen Zustand noch verstärkt wird. Verschiebt sich der Soll-Differenzschlupf bei steigender Fahrzeug-Ist-Verzögerung oder Fahrzeug-Soll-Verzögerung zu geringeren Werten, wird der Hinterachs-Bremsdruck bereits bei geringerem Ist-Differenzschlupf, d. h. bei einem geringeren relativen Überbremsen limitiert; ein zu frühes Eingreifen der überlagerten ABS-Regelung kann verhindert werden; das Fahrverhalten wird dadurch insgesamt ruhiger und sicherer.

Gemäß einer alternativen Ausführung, bei der die Vorderachse die zweite Fahrzeugachse und die Hinterachse die erste Fahrzeugachse ist, beispielsweise bei einem Nutzfahrzeug mit einer höheren Beladung auf der Hinterachse, z.B. einem Bus, wird die Vorderachse weniger auf den Untergrund gedrückt und beginnt somit tendenziell eher zu schlüpfen, wobei nach obiger Berechnungsmethode der Ist-Differenzschlupf dadurch ausgehend vom Offset-Differenzschlupf tendenziell geringer wird. Ist hierbei der nach obiger Berechnungsmethode bestimmte Ist-Differenzschlupf größer als der Soll-Differenzschlupf, ist die Vorderachse relativ zur Hinterachse unterbremst, d. h. der Vorderachs-Bremsdruck wird erhöht. Ist der Ist-Differenzschlupf hingegen kleiner als der Soll-Differenzschlupf, ist die Vorderachse relativ zur Hinterachse überbremst, d. h. der Hinterachs-Bremsdruck wird limitiert. Somit sorgt der vom Offset-Differenzschlupf in Richtung Null abfallende Soll-Differenzschlupf dafür, dass ein zu frühes Eingreifen der überlagerten ABS-Regelung an der Vorderachse vermieden werden kann, indem der Bremsdruck bereits bei einem geringeren relativen Überbremsen limitiert wird; somit wird das Fahrverhalten insgesamt ruhiger und sicherer.

Vorteilhafterweise kann aus dem Ist-Differenzschlupf eine Beladung des Fahrzeuges ermittelt werden. Ist das Fahrzeug unbeladen, d. h. auf die Hinterachse wirkt eine geringe Gewichtskraft, neigen die Hinterräder bei gleicher Bremsbetätigung bzw. bei einer vorgegebenen Fahrzeug-Soll-Verzögerung eher zu einem Blockieren als bei einem voll beladenen Fahrzeug mit höherem Gewicht auf der Hinterachse. Der Ist-Differenzschlupf variiert somit in Abhängigkeit der Beladung des Fahrzeuges bei einer vorgegebenen Fahrzeug-Soll-Verzögerung. Somit kann aus dem Ist-Differenzschlupf auf eine Beladung des Fahrzeuges geschlossen und von der Differenzschlupfregelung indirekt eine Verteilung der Bremskräfte auf die Fahrzeugachsen in Abhängigkeit der Beladung erreicht werden.

Vorzugsweise ist das Fahrzeug ein Nutzfahrzeug, bei dem sich zwischen einem beladenen Zustand und einem unbeladenen Zustand das Gewicht auf der Hinterachse relativ zur Vorderachse stärker verändert. In dem Fall ist die durch die erfindungsgemäße Bremsdruckregelung zu regelnde zweite Fahrzeugachse vorteilhafterweise die Hinterachse des Fahrzeuges. Zusätzlich kann auch eine zweite Hinterachse in gleicher Weise geregelt werden. Ist das Nutzfahrzeug beispielsweise ein Bus, ergibt sich entsprechend ein umgekehrter Beladungszustand der Fahrzeugachsen.

Zum Regeln der Fahrzeugverzögerung durch Einstellen der entsprechenden Bremsdrücke an den Radbremsen der beiden zu regelnden Fahrzeugachsen steuert eine erfindungsgemäße Vorrichtung, beispielsweise eine FV-Steuereinrichtung (Fahrzeugverzögerungs-Steuereinrichtung), ABS-Bremsventile, d. h. als 2/2-Magnetventil ausgebildete Einlassventile und Auslassventile an den Radbremsen der beiden zu regelnden Fahrzeugachsen derartig an, dass ein Bremsdruck an den zu regelnden Fahrzeugachsen entweder gehalten oder erhöht wird. Zusätzlich kann die FV-Steuereinrichtung den Bremsdruck an beiden zu regelnden Fahrzeugachsen durch Entlüften wahlweise auch senken, um die Bremskraft aufzuheben bzw. zu verringern.

Die ABS-Bremsventile sind hierbei Teil eines im Fahrzeug vorhandenen Antiblockiersystems (ABS) zur Regelung des Bremsschlupfes an den einzelnen Rädern. Die ABS-Bremsventile können sowohl von einer ABS-Steuereinrichtung als auch von der FV-Steuereinrichtung angesteuert werden. Die ABS-Steuereinrichtung hat jedoch Vorrang vor der FV-Steuereinrichtung, so dass bei Erkennen eines zu hohen Bremsschlupfes an einem der Räder der beiden zu regelnden Fahrzeugachsen von der ABS-Steuereinrichtung eine herkömmliche ABS-Regelung durchgeführt wird und die erfindungsgemäße Fahrzeugverzögerungsregelung durch die FV-Steuereinrichtung verboten ist.

Vorzugsweise können verschiedene beladungsabhängige Maximalverzögerungs-Kennlinien in der FV-Steuereinrichtung gespeichert sein, die der Fahrzeugverzögerungsregelung je nach Beladung des Fahrzeuges zugrunde gelegt werden. Der Beladungszustand, in Abhängigkeit dessen die Maximalverzögerungs-Kennlinie ausgewählt wird, kann beispielsweise aus der oben beschriebenen Differenzschlupfregelung abgeleitet werden, d. h. aus dem beladungsabhängigen Ist-Differenzschlupf. Es ist aber auch möglich, einen beliebigen Achslastsensor zu verwenden, um den Beladungszustand zu bestimmen, der entweder einen Weg zwischen beispielsweise einem Fahrzeugrahmen und der beladenen Fahrzeugachse oder einen auf die beladbare Fahrzeugachse bzw. einen Tragbalg an der beladbaren Fahrzeugachse wirkenden Druck über einen Drucksensor misst, woraus von der FV-Steuereinrichtung auf einen Beladungszustand geschlossen werden kann.

Die Beladungsinformation kann auch über einen CAN-BUS von einem ECAS-System auf die FV-Steuereinrichtung übermittelt werden, das die Luftfederung des Fahrzeuges elektronisch in Abhängigkeit einer Achslast regelt. Außerdem kann die FV-Steuereinrichtung eine aktuelle Fahrzeugmasse aus Informationen über die aktuelle Motorleistung und die daraus folgende Fahrzeugbeschleunigung ermitteln, woraus unter Kenntnis der unbeladenen Fahrzeugmasse auf eine Beladung geschlossen werden kann. Weiterhin kann bei der Bestimmung der Beladung bzw. bei der Auswahl der Maximalverzögerungs-Kennlinie auch das Vorhandensein eines Anhängers berücksichtigt werden, der anteilmäßig an der ermittelten Masse des Fahrzeugs beteiligt sein kann, wobei diese Information der FV-Steuereinrichtung beispielsweise von einer Anhänger-Steuereinrichtung über den CAN-BUS bereitgestellt werden kann.

Die Erfindung wird im Folgenden anhand der beiliegenden Zeichnung erläutert. Es zeigen:

Fig. 1  ein Fahrzeug mit einem elektronischen Bremssystem als Blockschaltbild;

Fig. 2  Diagramm der Abhängigkeit einer Fahrzeug-Ist-Verzögerung von einer Fahrzeug-Soll-Verzögerung zum Festlegen des Regelungsverhaltens;

Fig. 3  Diagramm einer Abhängigkeit eines Soll-Differenzschlupfes von einer Fahrzeug-Ist-Verzögerung zur Verwendung in einer Differenzschlupfregelung;

Fig. 4a,b  Abhängigkeit eines ausgesteuerten Bremsdruckes an den Fahrzeugachsen in Abhängigkeit einer Beladung;

Fig. 5  Flussdiagramm zur Durchführung der erfindungsgemäßen elektronischen Fahrzeugverzögerungsregelung;

Fig. 6  Flussdiagramm zur Durchführung der Differenzschlupfregelung als Teil der elektronischen Fahrzeugverzögerungsregelung gemäß Fig. 5; und

Fig. 7a, b  Verlauf der Fahrzeug-Ist-Verzögerung bei Durchführung der Fahrzeugverzögerungsregelung bei einem Einbremsvorgang und bei einem Ausbremsvorgang des Fahrzeuges.

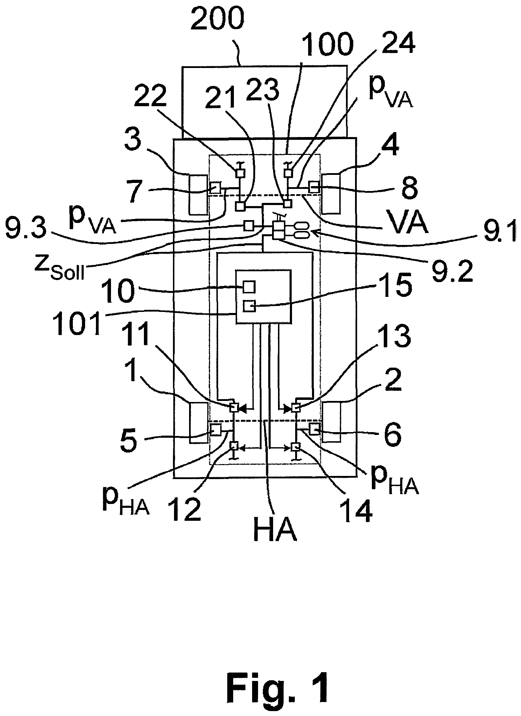

Die Fig. 1 zeigt ein Fahrzeug 200 mit einem Bremssystem 100 mit den hier relevanten Komponenten. Demnach ist als zweite Fahrzeugachse eine Hinterachse HA mit Hinterrädern 1, 2 sowie als erste Fahrzeugachse eine Vorderachse VA mit Vorderrädern 3, 4 vorgesehen. Die Hinterräder 1, 2 können über hintere Radbremsen 5, 6 und die Vorderräder 3, 4 über vordere Radbremsen 7, 8 abgebremst werden, indem in Abhängigkeit einer vom Fahrer vorgegebenen Fahrzeug-Soll-Verzögerung $z_{Soll}$ ein von Bremszylindern 9.1 bereitgestellter Bremsdruck p über ein zweikreisiges Bremsventil 9.2 auf die hinteren Radbremsen 5, 6 bzw. die vorderen Radbremsen 7, 8 übertragen wird. Die Fahrzeug-Soll-Verzögerung $z_{Soll}$ kann hierbei beispielsweise von einem als Bremswertgeber dienenden Drucksensor 9.3 erfasst werden, der einen vom Fahrer über das Bremsventil 9.2 ausgesteuerten Bremsdruck, gemäß Fig. 1 beispielhaft einen Vorderachs-Bremsdruck $p_{VA}$, erfasst. Das Bremssystem 100 kann ein elektro-hydraulisches oder elektropneumatisches Bremssystem sein, d. h. es wird ein Flüssigkeitsdruck oder ein Luftdruck ausgesteuert. Elektrisch angesteuert wird das Bremssystem 100 insbesondere von einer EBS-Steuereinrichtung 101.

Zur bremsschlupfgeregelten Abbremsung weist das Bremssystem 100 ein Antiblockiersystem (ABS) mit einer ABS-Steuereinrichtung 10 auf, die ABS-Bremsventile 11, 12, 13, 14, 21, 22, 23, 24 in Abhängigkeit eines erkannten Bremsschlupfes gepulst ansteuert. Die ABS-Steuereinrichtung 10 ist gemäß dieser Ausführung in der EBS-Steuereinrichtung 101 integriert.

Die ABS-Bremsventile 11, 12, 13, 14 an den hinteren Radbremsen 5, 6 sowie die ABS-Bremsventile 21, 22, 23, 24 an den vorderen Radbremsen 7, 8 sind jeweils als 2/2-Magnetventile ausgeführt, wobei für jede Radbremse 5, 6, 7, 8 ein Einlassventil 11, 13, 21, 23 und ein Auslassventil 12, 14, 22, 24 vorgesehen ist. Sind die Einlassventile 11, 13 geöffnet und die Auslassventile 12, 14 gesperrt, werden die hinteren Radbremsen 5, 6 mit einem vom Bremsventil 9.2 ausgesteuerten Hinterachs-Bremsdruck $p_{HA}$ beaufschlagt und somit eine entsprechende Bremsung durch die Hinterachse HA bewirkt. Sind umgedreht die Einlassventile 11, 13 gesperrt und die Auslassventile 12, 14 geöffnet, werden die hinteren Radbremsen 5, 6 entlüftet und somit die Bremswirkung durch die Hinterachse HA reduziert. Sind sowohl die Einlassventile 11, 13 als auch die Auslassventile 12, 14 gesperrt, wird ein an den hinteren Radbremsen 5, 6 wirkender Hinterachs-Bremsdruck $p_{HA}$ gehalten. Entsprechendes gilt für die ABS-Bremsventile 21, 22, 23, 24 an den vorderen Radbremsen 7, 8 durch deren Einstellung der Vorderachs-Bremsdruck $p_{VA}$ geregelt wird.

Im Rahmen des Ausführungsbeispiels wird in Bezug auf den Bremsdruck bzw. die Bremswirkung nicht zwischen der linken und der rechten hinteren Radbremse 5, 6 unterschieden, d. h. beide hinteren Radbremsen 5, 6 werden mit demselben Hinterachs-Bremsdruck $p_{HA}$ beaufschlagt, um zusammen mit den vorderen Radbremsen 7, 8, auf denen jeweils der Vorderachs-Bremsdruck $p_{VA}$ wirkt, eine der Fahrzeug-Soll-Verzögerung $z_{Soll}$ entsprechende Bremswirkung zu erreichen. Es ist allerdings auch möglich, die ABS-Bremsventile 11, 12, 13, 14, 21, 22, 23, 24 der einzelnen Radbremsen 5, 6, 7, 8 unabhängig voneinander zu steuern, so dass an jeder Radbremse 5, 6, 7, 8 unterschiedliche Bremsdrücke vorliegen können.

Erfindungsgemäß ist zusätzlich zur ABS-Regelung eine elektronische Regelung der Fahrzeugverzögerung (Fahrzeugverzögerungsregelung) vorgesehen, die den Vorderachs-Bremsdruck $p_{VA}$ und den Hinterachs-Bremsdruck $p_{HA}$ derartig regelt, dass sich im Fahrzeug 200 eine bestimmte, von der Fahrzeug-Soll-Verzögerung $z_{Soll}$ abhängige Fahrzeug-Ist-Verzögerung $z_{Ist}$, d. h. eine negative Beschleunigung einstellt. Der Hinterachs-Bremsdruck $p_{HA}$ wird dabei zusätzlich in Abhängigkeit eines erfassten Ist-Differenzschlupfes $DS_{Ist}$ geregelt.

Die Fahrzeugverzögerungsregelung wird von einer FV-Steuereinrichtung 15 gesteuert, die gemäß dieser Ausführung in der EBS-Steuereinrichtung 101 integriert und ausgebildet ist, die ABS-Bremsventile 11, 12, 13, 14 an den hinteren Radbremsen 5, 6 und die ABS-Bremsventile 21, 22, 23, 24 an den vorderen Radbremsen 7, 8 anzusteuern. Die ABS-Steuereinrichtung 10 hat allerdings bezüglich der Steuerung der ABS-Bremsventile 11, 12, 13, 14, 21, 22, 23, 24 Vorrang vor der FV-Steuereinrichtung 15. D. h. bei Erkennen eines unzulässigen Bremsschlupfes an einem der Hinterräder 1, 2 oder an einem der Vorderräder 3, 4 wird eine bereits begonnene Fahrzeugverzögerungsregelung abgebrochen und von der ABS-Steuereinrichtung 10 eine herkömmliche ABS-Regelung durchgeführt.

Die Fahrzeugverzögerungsregelung legt gemäß dieser Ausführungsform wie folgt fest, bei welcher Fahrzeug-Ist-Verzögerung $z_{Ist}$ in Abhängigkeit der Fahrzeug-Soll-Verzögerung $z_{Soll}$ die ABS-Bremsventile 11, 12, 13, 14, 21, 22, 23, 24 angesteuert werden und das Fahrzeug 200 dadurch verzögert wird:

In der FV-Steuereinrichtung 15 sind eine von der Fahrzeug-Soll-Verzögerung $z_{Soll}$ abhängige Maximalverzögerungs-Kennlinie $z_{Kmax}$ sowie eine Minimalverzögerungs-Kennlinie $z_{Kmin}$ gespeichert, die jeweils festgelegte Abhängigkeiten einer Maximalverzögerung $z_{max}$ bzw. Minimalverzögerung $z_{min}$ von der Fahrzeug-Soll-Verzögerung $z_{Soll}$ darstellen. Die Maximalverzögerungs-Kennlinie $z_{Kmax}$ kann auch als Feeling-Kurve bezeichnet werden, die harmonisch verläuft und dadurch ein angenehmes Bremsgefühl beim Fahrer hervorruft.

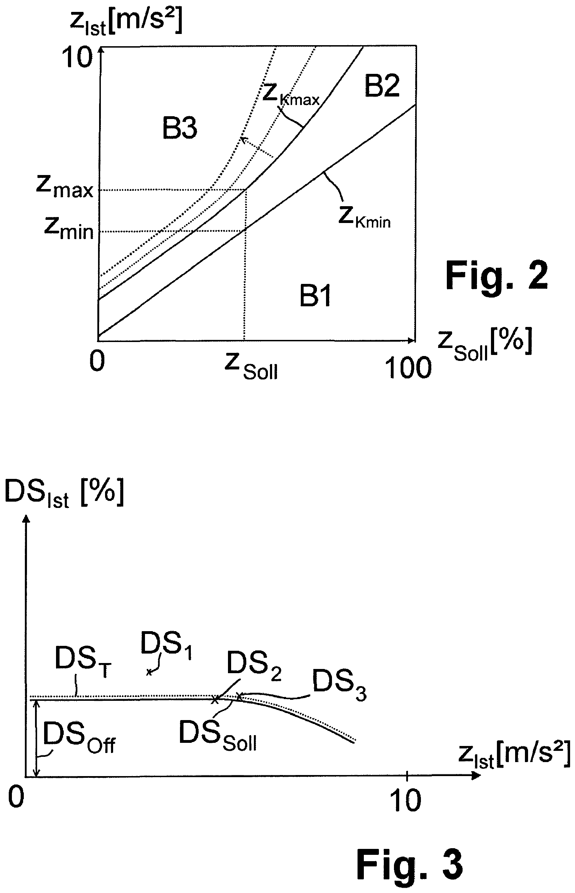

Gemäß Fig. 2 ist in einem Diagramm beispielhaft die Fahrzeug-Soll-Verzögerung $z_{Soll}$ in Prozent der Betätigung des Bremsventils 9.2 gegen die Fahrzeug-Ist-Verzögerung $z_{Ist}$ in m/s$^2$ aufgetragen. Die Maximalverzögerungs-Kennlinie $z_{Kmax}$ und die Minimalverzögerungs-Kennlinie $z_{Kmin}$ unterteilen das Diagramm in drei Bereiche B1, B2, B3. Ein erster Bereich B1 liegt zwischen der x-Achse ($z_{Soll}$) und der Minimalverzögerungs-Kennlinie $z_{Kmin}$, ein zweiter Bereich B2 zwischen Minimalverzögerungs-Kennlinie $z_{Kmin}$ und Maximalverzögerungs-Kennlinie $z_{Kmax}$ und ein dritter Bereich B3 oberhalb der Maximalverzögerungs-Kennlinie $z_{Kmax}$

Diese drei Bereiche B1, B2, B3 legen fest, wie die FV-Steuereinrichtung 15 die ABS-Bremsventile 11, 12, 13, 14 an den hinteren Radbremsen 5, 6 und die ABS-Bremsventile 21, 22, 23, 24 an den vorderen Radbremsen 7, 8 ansteuern darf und damit welche Bremskraft bzw. welcher Hinterachs-Bremsdruck $p_{HA}$ bzw. Vorderachs-Bremsdruck $p_{VA}$ in Abhängigkeit der Fahrzeug-Soll-Verzögerung $z_{Soll}$ und der Fahrzeug-Ist-Verzögerung $z_{ist}$ auf die hinteren Radbremsen 5, 6 bzw. vorderen Radbremsen 7, 8 ausgesteuert wird. Der Hinterachs-Bremsdruck $p_{HA}$ und der Vorderachs-Bremsdruck $p_{VA}$ werden in Abhängigkeit der drei Bereiche B1, B2, B3 wie folgt geregelt:

Wird über das Bremsventil 9.2 ein bestimmter Bremsdruck $p_{HA}$, $p_{VA}$ an die Radbremsen 5, 6, 7, 8 ausgesteuert und somit vom Fahrer eine Fahrzeug-Soll-Verzögerung $z_{Soll}$ angefordert und liegt die daraus resultierende Fahrzeug-Ist-Verzögerung $z_{Ist}$, die aus der Bremsung der vorderen und der hinteren Radbremsen 5, 6, 7, 8 folgt, im ersten Bereich B1, veranlasst die FV-Steuereinrichtung 15 ein Öffnen der Einlassventile 11, 13, 21, 23 und ein Schließen der Auslassventile 12, 14, 22, 24 so dass sowohl an den hinteren Radbremsen 5,6 als auch den vorderen Radbremsen 7, 8 ein Druckaufbau erfolgen kann und somit eine steigende Abbremsung durch die Hinterräder 1, 2 und die Vorderräder 3, 4 ermöglicht wird.

Der Hinterachs-Bremsruck $p_{HA}$ und der Vorderachs-Bremsdruck $p_{VA}$ werden somit erhöht, wenn die Fahrzeug-Ist-Verzögerung $z_{Ist}$ bei einer bestimmten vorgegebenen Fahrzeug-Soll-Verzögerung $z_{Soll}$ kleiner ist als die Minimalverzögerung $z_{min}$, die aus der Minimalverzögerungs-Kennlinie $z_{Kmin}$ für die Fahrzeug-Soll-Verzögerung $z_{Soll}$ folgt. Gemäß Fig. 2 ist beispielhaft angedeutet, dass eine Minimalverzögerung $z_{min}$ und eine Maximalverzögerung $z_{max}$ aus den y-Werten der Kennlinien $z_{Kmin}$ und $z_{Kmax}$ bei einer bestimmten Fahrzeug-Soll-Verzögerung $z_{Soll}$ (x-Wert) folgt.

Dieser erste Bereich B1 wird durch die Minimalverzögerungs-Kennlinie $z_{Kmin}$ bestimmt, die beispielsweise eine gesetzlich festlegte Mindestbremsung in Abhängigkeit der Fahrzeug-Soll-Verzögerung $z_{Soll}$ vorgeben kann. D. h. unterhalb der Minimalverzögerungs-Kennlinie $z_{Kmin}$ wird aus Sicherheitsgründen eine Abbremsung forciert - es sei denn, die übergeordnete ABS-Regelung greift ein.

Liegt die Fahrzeug-Ist-Verzögerung $z_{Ist}$ bei einer bestimmten Fahrzeug-Soll-Verzögerung $z_{Soll}$ in dem dritten Bereich B3, d. h. die Fahrzeug-Ist-Verzögerung $z_{Ist}$ ist größer als die Maximalverzögerung $z_{max}$, die aus der Maximalverzögerungs-Kennlinie $z_{Kmax}$ für die Fahrzeug-Soll-Verzögerung $z_{Soll}$ folgt, werden die Einlassventile 11, 13, 21, 23 und die Auslassventile 12, 14, 22, 24 so angesteuert, dass der Hinterachs-Bremsdruck $p_{HA}$ und der Vorderachs-Bremsdruck $p_{VA}$ limitiert werden.

Somit ist nicht erlaubt, den Hinterachs-Bremsdruck $p_{HA}$ sowie den Vorderachs-Bremsdruck $p_{VA}$ weiter zu erhöhen selbst dann, wenn die durch den Fahrer vorgegebene Fahrzeug-Soll-Verzögerung $z_{Soll}$ erhöht wird; es sei denn durch die steigende Fahrzeug-Soll-Verzögerung $z_{Soll}$ verschiebt sich die Fahrzeug-Ist-Verzögerung $z_{Ist}$ wieder in den ersten oder zweiten Bereich B1, B2. Im dritten Bereich B3 kann das Fahrzeug 200 also lediglich durch eine weitere Radbremse einer nicht geregelten Fahrzeugachse, z.B. einer zweiten Hinterachse, in deren Bremsverhalten die Fahrzeugverzögerungsregelung nicht eingreift, stärker verzögert werden.

Der Hinterachs-Bremsdruck $p_{HA}$ und der Vorderachs-Bremsdruck $p_{VA}$ und somit die Bremskraft der hinteren und der vorderen Radbremsen 5, 6, 7, 8 werden also in Abhängigkeit der Fahrzeug-Ist-Verzögerung $z_{Ist}$ auf einen bestimmten Wert begrenzt, der durch die Maximalverzögerungs-Kennlinie $z_{Kmax}$ vorgegeben ist. Durch das Regeln auf diese harmonisch verlaufende Maximalverzögerungs-Kennlinie $z_{Kmax}$ kann ein für den Fahrer angenehmes Bremsgefühl erreicht werden.

Liegt die Fahrzeug-Ist-Verzögerung $z_{Ist}$ zwischen der Maximalverzögerungs-Kennlinie $z_{Kmax}$ und der Minimalverzögerungs-Kennlinie $z_{Kmin}$, d. h. im zweiten Bereich B2 ist ein Erhöhen, Verringern und auch ein Halten des Hinterachs-Bremsdruckes $p_{HA}$ und des Vorderachs-Bremsdruckes $p_{VA}$ erlaubt, um das Fahrzeug 200 zu verzögern.

Dabei wird in dem zweiten Bereich B2 die Fahrzeug-Ist-Verzögerung $z_{Ist}$ zusätzlich in Abhängigkeit des Ist-Differenzschlupfes $DS_{Ist}$ geregelt, indem der Hinterachs-Bremsdruck $p_{HA}$ je nach Höhe eines tatsächlich vorliegenden Ist-Differenzschlupfes $DS_{Ist}$ gehalten, verringert oder erhöht wird. Somit wird eine Differenzschlupfregelung (DSR) durchgeführt.

Als Differenzschlupf wird gemäß der Ausführungsform der Unterschied zwischen einem Drehverhalten der Vorderräder 3, 4 und einem Drehverhalten der Hinterräder 1, 2 verstanden. Das Drehverhalten wird gemäß diesem Beispiel durch einen Vorderachs-Bremsschlupf $DS_{VA}$ bzw. einem Hinterachs-Bremsschlupf $DS_{HA}$ charakterisiert, die beide aus dem Mittelwert der Bremsschlüpfe der einzelnen Räder 1, 2, 3, 4 der jeweiligen Fahrzeugachse VA, HA folgen.

Gemäß dieser Ausführungsform wird der Ist-Differenzschlupf $DS_{Ist}$ aus dem Vorderachs-Bremsschlupf $DS_{VA}$ und dem Hinterachs-Bremsschlupf $DS_{HA}$ wie folgt gebildet:

$$DS_{Ist} \sim (DS_{HA}-DS_{VA})/DS_{HA}*100\%; \qquad (1.1)$$

der Unterschied im Drehverhalten der Fahrzeugachsen VA, HA ist somit durch eine Abweichung des Vorderachs-Bremsschlupfes $DS_{VA}$ vom Hinterachs-Bremsschlupf $DS_{HA}$ definiert, die sich insbesondere erhöht, wenn die Hinterachse HA im Gegensatz zur Vorderachse VA überbremst ist, d. h. eher dazu neigt zu schlüpfen.

Eine alternative Berechnungsmethode des Drehverhaltens der Hinterräder 1, 2 relativ zum Drehverhalten der Vorderräder 3, 4 ist, den Ist-Differenzschlupf $DS_{Ist}$ aus Drehgeschwindigkeiten $v_{VA}$ bzw. $v_{HA}$ der Fahrzeugachsen VA, HA zu bestimmen, d. h.

$$DS_{Ist} \sim (v_{VA}-v_{HA})/v_{VA}*100\%, \qquad (1.2)$$

wobei die Drehgeschwindigkeiten $v_{VA}$ bzw. $v_{HA}$ beispielsweise aus einem Mittelwert der Drehgeschwindigkeiten der Räder 1, 2, 3, 4 der jeweiligen Fahrzeugachse VA, HA folgen können.

Die beiden oben genannten Formeln 1.1 und 1.2 sind lediglich beispielhaft, um eine den Unterschied im Drehverhalten charakterisierende Größe zu erhalten. Es können aber auch beliebige andere Abhängigkeiten verwendet werden.

Für die Differenzschlupfregelung ist vorgesehen, dass die FV-Steuereinrichtung 15 nach Betätigung des Bremsventils 9.2 und vorliegender Fahrzeug-Soll-Verzögerung $z_{Soll}$ ständig den Ist-Differenzschlupf $DS_{Ist}$ bestimmt. Weicht der Ist-Bremsschlupf $DS_{Ist}$ von einem Soll-Bremsschlupf $DS_{Soll}$ ab, wobei bei ungetakteten ABS-Bremsventilen 11, 12, 13, 14 ein vorbestimmter Toleranzwert $DS_T$ einbezogen werden kann, und liegt die Fahrzeug-Ist-Verzögerung $z_{Ist}$ im zweiten Bereich B2, so steuert die FV-Steuereinrichtung 15 die ABS-Bremsventile 11, 12, 13, 14 der Hinterräder 1, 2 derartig an, dass der Ist-Differenzschlupf $DS_{Ist}$ wieder innerhalb der Toleranz $DS_T$ dem Soll-Differenzschlupf $DS_{Soll}$ entspricht:

Liegt der Ist-Differenzschlupf $DS_{Ist}$ unterhalb des Soll-Differenzschlupfes $DS_{Soll}$, ist die Hinterachse HA bezogen auf den Soll-Differenzschlupf $DS_{Soll}$ relativ zur Vorderachse VA unterbremst. In diesem Fall werden die ABS-Einlassventile 11, 13 geöffnet, so dass der Hinterachs-Bremsdruck $p_{HA}$ erhöht wird. Liegt der Ist-Differenzschlupf $DS_{Ist}$ oberhalb des Soll-Differenzschlupfes $DS_{Soll}$ ist der Hinterachs-Bremsschlupf $DS_{HA}$ bezogen auf den Soll-Differenzschlupf $DS_{Soll}$ größer als der Vorderachs-Bremsschlupf $DS_{VA}$, d. h. die Hinterachse HA ist überbremst. In diesem Fall wird der Hinterachs-Bremsdruck $p_{HA}$ limitiert, vorzugsweise gehalten, so dass die Bremswirkung an den Hinterrädern 1, 2 nicht weiter erhöht wird.

Der Soll-Differenzschlupf $DS_{Soll}$, auf den eingeregelt wird, ist gemäß dieser Ausführungsform abhängig von der Fahrzeug-Ist-Verzögerung $z_{Ist}$, wie in Fig. 3 dargestellt. Bei geringen Fahrzeug-Ist-Verzögerungen $z_{Ist}$ ist der Soll-Differenzschlupf $DS_{Soll}$ zunächst konstant und liegt bei einem bestimmtem Offset-Differenzschlupf $DS_{Off}$. Der Offset-Differenzschlupf $DS_{Off}$ wird gemäß dieser Ausführungsform zu Beginn einer Bremsung, d. h. wenn noch keine Bremskräfte der Radbremsen 5, 6, 7, 8 wirken, bestimmt, so dass insbesondere ein Motorschleppmoment und ein Verschleiß der Räder 1, 2, 3, 4 berücksichtigt werden. Der Offset-Differenzschlupf $DS_{Off}$ ist bei einer Berechnung des Ist-Differenzschlupfes $DS_{Ist}$ gemäß den Formeln 1.1 oder 1.2 positiv, wenn die Hinterachse HA die durch den Motor des Fahrzeuges 100 angetriebene Achse ist, da sich die Hinterachse HA durch das Motorschleppmoment langsamer dreht. Vom Offset-Differenzschlupf $DS_{Off}$ ausgehend fällt der Soll-Differenzschlupf $DS_{Soll}$ in Richtung Null, d. h. in Richtung eines synchronen Raddrehverhaltens der Räder 1, 2, 3, 4 der ersten und zweiten Fahrzeugachse HA, VA ab.

Liegt der Ist-Differenzschlupf $DS_{Ist}$ beispielsweise zu Beginn der Differenzschlupfregelung oberhalb des Soll-Differenzschlupfes $DS_{Soll}$ und auch oberhalb der Toleranz $DS_T$ am Punkt $DS_1$, wird der Hinterachs-Bremsdruck $p_{HA}$ zunächst limitiert. Gemäß diesem Ausführungsbeispiel ist lediglich eine Toleranz $DS_T$ oberhalb des Soll-Differenzschlupfes $DS_{Soll}$ vorgesehen. Alternativ oder zusätzlich kann aber auch eine Toleranz $DS_T$ unterhalb des Soll-Differenzschlupfes $DS_{Soll}$ vorgesehen sein. Wird vom Fahrer durch weitere Betätigung des Bremsventils 9.2 eine höhere Fahrzeug-Soll-Verzögerung $z_{Soll}$ angefordert, wird das Fahrzeug 200 zusätzlich nur noch mit den vorderen Radbremsen 7, 8 abgebremst, falls die Fahrzeug-Ist-Verzögerung $z_{Ist}$ den zweiten Bereich B2 nicht verlässt; die Fahrzeug-Ist-Verzögerung $z_{Ist}$ steigt. Dadurch verschiebt sich der Ist-Differenzschlupf $DS_{Ist}$ vom Punkt $DS_1$ zum Punkt $DS_2$ beispielsweise genau auf die $DS_{Soll}$-Kurve, so dass die Limitierung des Hinterachs-Bremsdruckes $p_{HA}$ aufgehoben und der Hinterachs-Bremsdruck $p_{HA}$ gepulst erhöht wird. Durch die zusätzliche Bremswirkung der hinteren Radbremsen 5, 6 verschiebt sich nun im weiteren Verlauf der Bremsung der Punkt $DS_2$ in Richtung steigender Fahrzeug-Ist-Verzögerung $z_{Ist}$ wieder in Richtung oberhalb der $DS_{Soll}$-Kurve zum Punkt $DS_3$. Erreicht der Ist-Differenzschlupf $DS_{Ist}$ den Toleranzwert $DS_T$ bzw. liegt leicht drüber, wird eine weiteres Druckerhöhen an den hinteren Radbremsen 5, 6 gesperrt, der Hinterachs-Bremsdruck $p_{HA}$ wird wieder limitiert und eine Bremsung nur von den vorderen Radbremsen 7, 8 bewirkt.

Bei steigender Fahrzeug-Ist-Verzögerung $z_{Ist}$ fällt der Soll-Differenzschlupf $DS_{Soll}$ zu kleineren Werten ab. Dadurch wird dem Umstand Rechnung getragen, dass die Hinterachse HA bei hohen Verzögerungen des Fahrzeuges 200 und insbesondere einer geringen oder hohen Beladung, einem hohen Beladungsschwerpunkt und kurzem Radstand tendenziell überbremst ist, d. h. eher dazu neigt, zu schlüpfen, d. h. der Ist-Differenzschlupf $DS_{Ist}$ verschiebt sich tendenziell zu höheren Werten bei einer Berechnung nach den Formeln 1.1 oder 1.2. Ziel des Verfahrens ist es somit, bei hoher Verzögerung, zu der die Vorderachse VA im zweiten Bereich B2 ohne Druckbegrenzung beiträgt, an der Hinterachse HA länger eine Bremskraftlimitierung vorzunehmen und ein Drückerhöhen zu sperren. Ein Schlüpfen der Hinterachse HA und ein dadurch bedingtes Eingreifen der übergeordneten ABS-Regelung kann vermieden werden und die Bremsung wird ruhiger und sicherer.

Wird in Folge der Differenzschlupfregelung oder aus anderen Gründen der zweite Bereich B2 in Richtung des ersten Bereiches B1 verlassen, wird die Differenzschlupfregelung in vorteilhafter Weise gepulst abgebrochen und der Hinterachs-Bremsdruck $p_{HA}$ erhöht.

Gemäß einer Ausführungsform können für den Fall, dass im dritten Bereich B3 ein Ist-Differenzschlupf $DS_{Ist}$ größer als der Soll-Differenzschlupf $DS_{Soll}$, d. h. die Hinterachse HA überbremst ist, vorliegt, die Auslassventile 12, 14 geöffnet werden, so dass ein Druckabbau an den hinteren Radbremsen 5, 6 stattfindet, um möglichst schnell die Maximalverzögerungs-Kennlinie $z_{Kmax}$ zu erreichen bzw. zu unterschreiten und das Überbremsen der Hinterachse HA zu verringern.

Durch die Differenzschlupfregelung wird eine elektronische Bremskraft- bzw. Bremsdruckverteilung in Abhängigkeit der Achslasten auf der Vorderachse VA und der Hinterachse HA wie folgt bewirkt:

Ist das Fahrzeug 200 unbeladen, d. h. auf die Hinterachse HA wirkt eine geringe Gewichtskraft, neigen die Hinterräder 1, 2 bei gleicher Bremsbetätigung bzw. bei einer vorgegebenen Fahrzeug-Soll-Verzögerung $z_{Soll}$ eher zu einem Blockieren als bei einem voll beladenen Fahrzeug 200 mit höherem Gewicht auf der Hinterachse HA. Dies resultiert daraus, dass die Hinterräder 1, 2 durch das hohe Gewicht im beladenen Zustand stärker auf den Untergrund gedrückt werden. Auf die Vorderachse VA hat die Beladung aufgrund des hohen Motorengewichts zumindest keinen signifikanten Einfluss.

Der Ist-Differenzschlupf $DS_{Ist}$ variiert somit in Abhängigkeit der Beladung des Fahrzeuges 200 bei einer bestimmten Fahrzeug-Soll-Verzögerung $z_{Soll}$. Die Differenzschlupfregelung kann zwar die auf die Hinterachse HA wirkende Gewichtskraft nicht direkt messen, sie steuert jedoch immer zu dem Zeitpunkt die ABS-Ventile 11, 12, 13, 14 an den hinteren Radbremsen 5, 6 an, zu dem sich der beladungsabhängige Ist-Differenzschlupf $DS_{Ist}$ vom Soll-Differenzschlupf $DS_{Soll}$ um mindestens die Toleranz $DS_T$ unterscheidet. Da die FV-Steuereinrichtung 15 im Rahmen der Differenzschlupfregelung den Vorderachs-Bremsdruck $p_{VA}$ nicht regelt, wird von der Differenzschlupfregelung indirekt eine Verteilung der Bremskräfte auf die Fahrzeugachsen VA, HA in Abhängigkeit der Beladung erreicht. Somit kann aus dem Ist-Differenzschlupf $DS_{Ist}$ auf eine Beladung des Fahrzeuges 200 geschlossen werden.

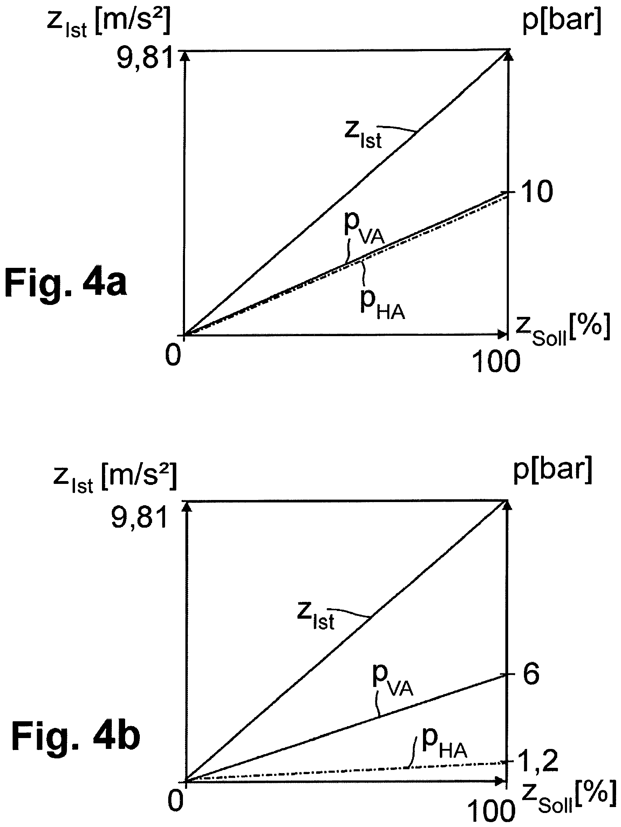

Dies kann bei unterschiedlichen Beladungen zu den in Fig. 4a und 4b gezeigten Situationen führen:

Ist das Fahrzeug 200 voll beladen, so verteilt sich die Bremskraft auf beide Fahrzeugachsen HA, VA in etwa gleichmäßig, wie in dem Ausführungsbeispiel der Fig. 4a dargestellt. D. h. in Abhängigkeit der Fahrzeug-Soll-Verzögerung $z_{Soll}$ werden die vorderen und die hinteren Radbremsen 5, 6, 7, 8 in etwa mit demselben Bremsdruck $p_{VA}$, $p_{HA}$ beaufschlagt, um eine Fahrzeug-Ist-Verzögerung $z_{Ist}$ zu bewirken, die bei $z_{Soll}$ = 100% beispielsweise $z_{Ist}$=1g (g= 9,81 m/s$^2$) entspricht, wenn die vorderen und hinteren Radbremsen 5, 6, 7, 8 jeweils mit einem Bremsdruck von $p_{VA}$ = $p_{HA}$=10bar beaufschlagt werden.

Ist das Fahrzeug 200 weniger als voll beladen, z.B. unbeladen wie im Ausführungsbeispiel in Fig. 4b dargestellt, und weist im unbeladenen Zustand eine Masse auf, die ca. einem Drittel der Masse des voll beladenen Fahrzeuges 200 beträgt, wird wie in Fig. 4b dargestellt ein größerer Teil der Bremsung von den vorderen Radbremsen 7, 8 bewirkt. In diesem Beispiel wird bei einer Fahrzeug-Soll-Verzögerung $z_{Soll}$ von 100% (entspricht gemäß obigem Beispiel 1g mit g= 9,81 m/s$^2$) ein Vorderachs-Bremsdruck $p_{VA}$ von 6 bar und ein Hinterachs-Bremsdruck $p_{HA}$ von lediglich 1,2 bar eingestellt, um eine der Fahrzeug-Soll-Verzögerung $z_{Soll}$ entsprechende Fahrzeug-Ist-Verzögerung $z_{Ist}$ von 100% wie in Fig. 4a für den voll beladenen Zustand zu erreichen. Die Vorderachse VA wird weniger und die Hinterachse HA erheblich weniger stark abgebremst, wodurch ein frühzeitiges Blockieren bei geringer Beladung von Vorderachse VA und insbesondere Hinterachse HA vermieden werden kann.

Die Maximalverzögerungs-Kennlinie $z_{Kmax}$ und die Minimalverzögerungs-Kennlinie $z_{Kmin}$ können in der FV-Steuereinrichtung 15 gespeichert sein, wobei zumindest die Maximalverzögerungs-Kennlinie $z_{Kmax}$ in Abhängigkeit der Beladung variieren kann. Die Maximalverzögerungs-Kennlinie $z_{Kmax}$ verschiebt sich dabei wie in Fig. 2 gestrichelt angedeutet zu höheren Fahrzeug-Ist-Verzögerungen $z_{Ist}$ hin, so dass der dritte Bereich B3 verkleinert wird. D. h. für eine bestimmte Fahrzeug-Soll-Verzögerung $z_{Soll}$ wird der Vorderachs-Bremsdruck $p_{VA}$ erst bei einer höheren Fahrzeug-Ist-Verzögerung $z_{Ist}$ gehalten. Der Hinterachs-Bremsdruck $p_{HA}$, der durch die Differenzschlupfregelung nach Differenzschlupfkriterien an den Vorderachs-Bremsdruck $p_{VA}$ angeglichen wird, erhöht sich dadurch bei einer bestimmten Fahrzeug-Soll-Verzögerung $z_{Soll}$ ebenfalls. Das Fahrzeug 200 wird also im unbeladenen Zustand bei gleicher Fahrzeug-Soll-Verzögerung $z_{Soll}$ stärker verzögert als im beladenen Zustand. Somit kann dem Fahrer durch die Verschiebung der Maximalverzögerungs-Kennlinie $z_{Kmax}$ der Beladungszustand vermittelt werden, so dass dieser entsprechend reagieren kann.

Zur Messung des Beladungszustandes kann ein ECAS-System vorgesehen sein, das die Luftfederung des Fahrzeuges 200 elektronisch regelt und dazu einen nicht dargestellten Wegsensor aufweist, der den Weg zwischen der Hinterachse HA und einem Bezugspunkt am Fahrzeug 200 in Abhängigkeit der Beladung misst. Weiterhin kann auch eine mechanisch-elektronische achslastabhängige Bremsdruckverteilungseinrichtung (ALB) den Wert der Beladung liefern, die ebenfalls von einem Wegsensor oder einem Drucksensor gesteuert wird. Beide Systeme, d. h. ECAS und ALB, können beispielsweise über den CAN-BUS den von diesen Systemen erfassten Beladungszustand an die FV-Steuereinrichtung 15 übermitteln, die in Abhängigkeit davon die Maximalverzögerungs-Kennlinie $z_{Kmax}$ auswählt.

Es ist aber auch möglich, dass die FV-Steuereinrichtung 15 den Beladungszustand selbst ermittelt. Dazu kann die Beladung anhand des gemessenen Ist-Differenzschlupfes $DS_{Ist}$ wie oben beschrieben bestimmt werden und daraus der Beladungszustand ermittelt werden. Alternativ kann im Fahrzeug 200 auch ein weiterer Wegsensor zwischen einem fahrzeugfesten Rahmen und den Fahrzeugachsen HA, VA angeordnet sein, dessen beladungsabhängiger Verstellweg von der FV-Steuereinrichtung erfasst werden kann. Aus dem Verstellweg kann auf die Beladung des Fahrzeuges geschlossen werden.

Alternativ können von einem nicht dargestellten Motorsteuergerät über den CAN-Bus Leistungsdaten des Motors sowie Fahrzeugbeschleunigungsdaten übermittelt werden, aus denen die FV-Steuereinrichtung 15 auf eine Masse des Fahrzeuges 200 und somit auf eine zusätzliche Beladung gegenüber einem Leergewicht des Fahrzeuges 200 schließen kann. Dabei kann auch berücksichtigt werden, ob ein Anhänger an das Fahrzeug 200 angekuppelt ist, der anteilmäßig an der ermittelten Masse des Fahrzeugs 200 beteiligt sein kann und der das Fahrverhalten an der Hinterachse HA zusätzlich beeinflussen kann. Diese Information kann über den CAN-BUS von einer Anhänger-Steuereinrichtung übertragen werden. Weiterhin kann ein Verhalten einer Antriebsschlupfregelung berücksichtigt werden, aus dem ebenfalls ein Beladungszustand ermittelt werden kann.

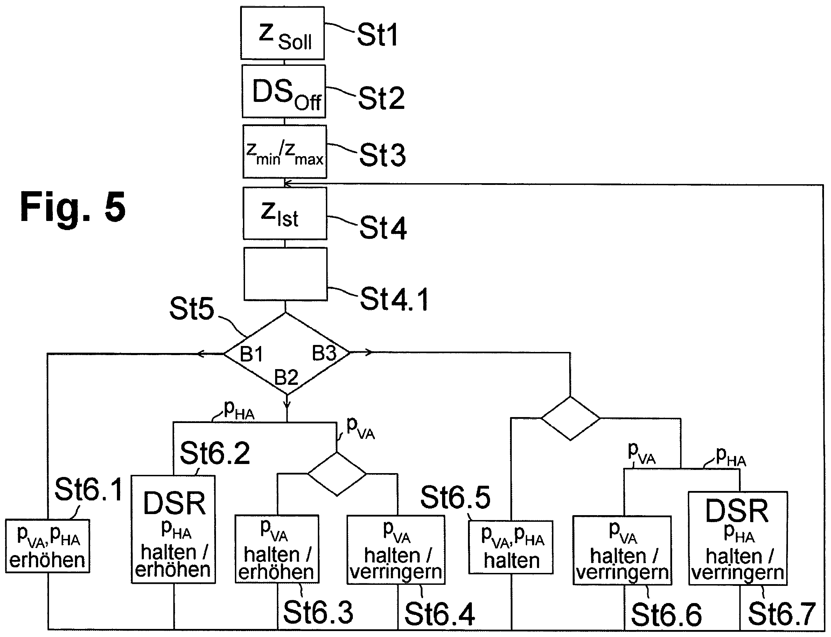

Das erfindungsgemäße Verfahren zur elektronischen Bremsdruckregelung kann gemäß Fig. 5 wie folgt durchgeführt werden. In einem Schritt St0 wird die Bremsung gestartet, z.B. durch Betätigung des Bremsventils 9.2 durch den Fahrer. In einem ersten Schritt St1 wird mit dem Bremswertgeber 9.3 die Fahrzeug-Soll-Verzögerung $z_{Soll}$ in Abhängigkeit der Betätigung des Bremsventils 9.2 erfasst, wobei entweder ein Betätigungsweg des Bremsventils 9.2 oder ein durch Betätigung des Bremsventils 9.2 ausgesteuerter Hinterachs- oder Vorderachs-Bremsdruck $p_{HA}$, $p_{VA}$ erfasst wird.

In einem zweiten Schritt St2 wird zu Beginn der Bremsung, d. h. wenn noch keine Bremskräfte wirken, ein Offset-Differenzschlupf $DS_{Off}$ festgelegt. Dieser Offset-Differenzschlupf $DS_{Off}$ kann sich aufgrund eines Motorschleppmoments oder einem Verschleiß der Räder 1, 2, 3, 4 und somit variierenden Radumfängen von Null unterscheiden.

In einem dritten Schritt St3 wird in Abhängigkeit der Beladung des Fahrzeuges 200 eine gespeicherte Maximalverzögerung-Kennlinie $z_{Kmax}$ ausgewählt. Weiterhin wird auch eine Minimalverzögerungs-Kennlinie $z_{Kmin}$ festgelegt. Für die erfasste Fahrzeug-Soll-Verzögerung $z_{Soll}$ ergeben sich somit aus den Kennlinien $z_{Kmax}$, $z_{Kmin}$ Werte für die Maximalverzögerung $z_{max}$ und die Minimalverzögerung $z_{min}$, die der folgenden elektronischen Fahrzeugverzögerungsregelung zugrunde gelegt werden.

In einem vierten Schritt St4 wird die Fahrzeug-Ist-Verzögerung $z_{Ist}$ erfasst. Diese folgt beispielsweise aus einem nicht dargestellten Beschleunigungssensor oder aus der Ableitung einer ermittelten Fahrzeugreferenzgeschwindigkeit $v_{ref}$, die beispielsweise aus einem Mittelwert der Drehgeschwindigkeiten der Räder 1, 2, 3, 4 bestimmt werden kann. Weiterhin wird in einem Schritt St4.1 ermittelt, ob ein Einbremsvorgang oder ein Ausbremsvorgang vorliegt, d. h. ob die Fahrzeug-Ist-Verzögerung $z_{Ist}$ steigt oder fällt und ob dies der Fahrer durch Erhöhen bzw. Verringern der Fahrzeug-Soll-Verzögerung $z_{Soll}$ angefordert hat.

In einem fünften Schritt St5 wird der im vierten Schritt St4 bestimmten Fahrzeug-Ist-Verzögerung $z_{Ist}$ von der FV-Steuereinrichtung 15 in Abhängigkeit der Fahrzeug-Soll-Verzögerung $z_{Soll}$ ein Bereich B1, B2, B3 des Diagramms gemäß Fig. 2 zugeordnet bzw. verglichen, ob die Fahrzeug-Ist-Verzögerung $z_{Ist}$ größer oder kleiner als die Maximalverzögerung $z_{max}$ bzw. die Minimalverzögerung $z_{min}$ ist.

Liegt die Fahrzeug-Ist-Verzögerung $z_{Ist}$ im ersten Bereich B1, d. h. ist sie kleiner als die Minimalverzögerung $z_{min}$ werden in einem folgenden Schritt St6.1 die Einlassventile 11, 13, 21, 23 der hinteren und vorderen Radbremsen 5, 6, 7, 8 geöffnet und die Auslassventile 12, 14, 22, 24 geschlossen, so dass sowohl der Hinterachs-Bremsdruck $p_{HA}$ als auch der Vorderachs-Bremsdruck $p_{VA}$ erhöht werden.

Liegt die Fahrzeug-Ist-Verzögerung $z_{Ist}$ im zweiten Bereich B2, d. h. ist sie kleiner als die Maximalverzögerung $z_{max}$ und größer als die Minimalverzögerung $z_{min}$ werden in einem Schritt St6.2 die Einlassventile 11, 13 der hinteren Radbremsen 5, 6 in Abhängigkeit des Ist-Differenzschlupfes $DS_{Ist}$, der vorzugsweise während der gesamten Bremsung von der FV-Steuereinrichtung 15 bestimmt wird, derartig angesteuert, dass dieser innerhalb der Toleranz $DS_T$ dem in der FV-Steuereinrichtung 15 hinterlegten Soll-Differenzschlupf $DS_{Soll}$ entspricht, der zumindest zu Beginn der Bremsung gleich dem im zweiten Schritt St2 festgelegten Offset-Differenzschlupf $DS_{Off}$ ist und der sich während der Bremsung fahrzeugverzögerungsabhängig verändern kann. Dabei kann der Hinterachs-Bremsdruck $p_{HA}$ entweder gehalten oder erhöht werden. Gemäß einer Ausführungsform kann auch im zweiten Bereich B2 ein Drucksenken durch die Differenzschlupfregelung vorgesehen sein, indem die Auslassventile 12, 14 der hinteren Radbremsen 5, 6 angesteuert werden.

Die Einlassventile 21, 23 sowie die Auslassventile 22, 24 der vorderen Radbremsen 7, 8 werden im zweiten und im dritten Bereich B2, B3 vorzugsweise in Abhängigkeit davon gesteuert, ob im Schritt St4.1 ein Einbremsvorgang oder ein Ausbremsvorgang erkannt wurde, wobei der Vorderachs-Bremsdruck $p_{VA}$ bei einem Einbremsvorgang im zweiten Bereich B2 in einem Schritt St6.3 gehalten oder erhöht und im dritten Bereich B3 gemäß einem Schritt St6.5 gehalten wird und bei einem Ausbremsvorgang im zweiten und im dritten Bereich B2, B3 limitiert, d. h. gehalten oder verringert wird (Schritte St6.4 und St6.6), je nachdem, ob die Fahrzeug-Soll-Verzögerung $z_{Soll}$ bereits erreicht ist oder nicht.

Die Einlassventile 11, 13 sowie die Auslassventile 12, 14 der hinteren Radbremsen 5, 6 werden im dritten Bereich B3 ebenfalls in Abhängigkeit davon gesteuert, ob ein Einbremsvorgang oder ein Ausbremsvorgang vorliegt, wobei der Hinterachs-Bremsdruck $p_{HA}$ bei einem Einbremsvorgang gemäß Schritt St6.5 gehalten und bei einem Ausbremsvorgang gemäß Schritt St6.7 limitiert, d. h. gehalten oder verringert wird, je nachdem, ob der Soll-Differenzschlupf $DS_{Soll}$ bereits erreicht ist oder nicht, wobei der Hinterachs-Bremsdruck $p_{HA}$ bei einem Ist-Differenzschlupf $DS_{Ist}$ größer als dem Soll-Differenzschlupf $DS_{Soll}$, d. h. bei einem relativen Überbremsen, verringert wird.

Nach den Schritten St6.1, St6.2, St6.3, St6.4, St6.5, St6.6 oder St6.7 beginnt die elektronische Fahrzeugverzögerungsregelung innerhalb einer Bremsung wieder mit dem vierten Schritt St4. Somit wird bei einer Bremsung ständig die erfasste Fahrzeug-Ist-Verzögerung $z_{Ist}$ einem Bereich B1, B2, B3 zugeordnet und der Hinterachs-Bremsdruck $p_{HA}$ und der Vorderachs-Bremsdruck $p_{VA}$ entsprechend eingestellt.

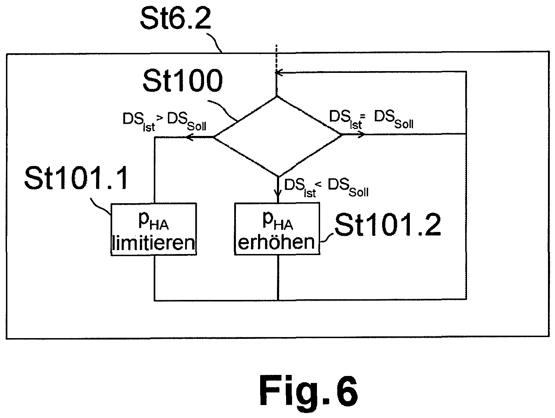

Die Differenzschlupfregelung im Schritt St6.2 verläuft gemäß Fig. 6 wie folgt: In einem Schritt St100 wird der Ist-Differenzschlupf $DS_{Ist}$ mit dem Soll-Differenzschlupf $DS_{Soll}$ verglichen, der in der FV-Steuereinrichtung 15 wie in Fig. 3 dargestellt hinterlegt ist und bei dem der in Schritt St2 der Fahrzeugverzögerungsregelung bestimmte Offset-Differenzschlupf $DS_{Off}$ berücksichtigt wird.

Ist der Ist-Differenzschlupf $DS_{Ist}$ größer als der Soll-Differenzschlupf $DS_{Soll}$, ist die Hinterachse HA relativ zur Vorderachse VA überbremst. Liegt der Ist-Differenzschlupf $DS_{Ist}$ in diesem Fall oberhalb der Toleranz $DS_T$ veranlasst die FV-Steuereinrichtung 15 in einem Schritt St101.1 ein Limitieren des Hinterachs-Bremsdruckes $p_{HA}$, so dass die Bremskraft der Radbremsen 5, 6 auf der Hinterachse HA nicht weiter erhöht wird. Ist der Ist-Differenzschlupf $DS_{Ist}$ kleiner als der Soll-Differenzschlupf $OS_{Soll}$ bzw. kleiner als die Toleranz $DS_T$, wird von der FV-Steuereinrichtung 15 in einem Schritt St101.2 ein Erhöhen des Hinterachs-Bremsdruckes $p_{HA}$ angefordert, da die Hinterachse HA relativ zur Vorderachse VA unterbremst ist. Ist der Ist-Differenzschlupf $DS_{Ist}$ innerhalb der Toleranz $DS_T$ gleich dem Soll-Differenzschlupf $DS_{Soll}$ beginnt das Verfahren von vorn; die Blockierneigung der Hinterachse HA wurde an die Blockierneigung der Vorderachse VA angepasst.

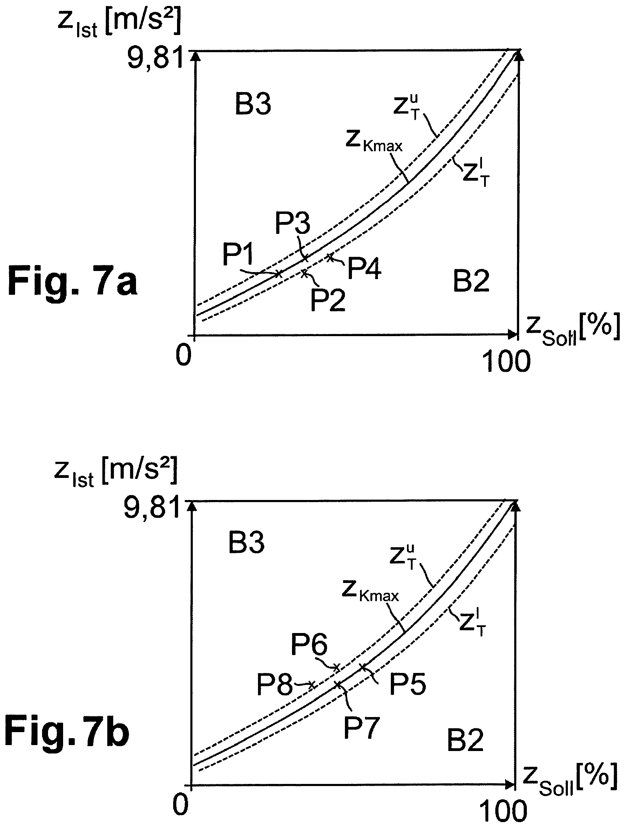

Die Figuren 7a und 7b zeigen beispielhaft eine Maximalverzögerungs-Kennlinie $z_{Kmax}$ mit einer oberen Toleranz $z^u_T$ und einer unteren Toleranz $z^l_T$ bei einem Einbremsvorgang (Fig. 7a) und einem Ausbremsvorgang (Fig. 7b). Gestartet wird bei Punkt P1, der einer Bremssituation entspricht, in der der Fahrer eine Fahrzeug-Soll-Verzögerung $z_{Soll}$ vorgibt. Bei Punkt P1 ist die Maximalverzögerungs-Kennlinie $z_{Kmax}$ erreicht, d. h. von der erfindungsgemäßen Fahrzeugverzögerungsregelung wird sowohl der Hinterachs-Bremsdruck $p_{HA}$ als auch der Vorderachs-Bremsdruck $p_{VA}$ durch Sperren der Einlassventile 11, 13, 21, 23 und der Auslassventile 12, 14, 22, 24 limitiert, vorzugsweise gehalten, unabhängig von dem erfassten Ist-Differenzschlupf $DS_{Ist}$; die Fahrzeug-Ist-Verzögerung $z_{Ist}$ liegt im dritten Bereich B3.

Betätigt der Fahrer das Bremspedal stärker, verschiebt sich die Bremssituation von Punkt P1 zu Punkt P2, wobei die untere Toleranz $z^l_T$ unterschritten ist; die Fahrzeug-Ist-Verzögerung $z_{Ist}$ liegt im zweiten Bereich B2. Da es sich um einen Einbremsvorgang handelt, wird der Vorderachs-Bremsdruck $p_{VA}$ in diesem zweiten Bereich B2 entweder

EP 3 303 076 B1

gehalten oder erhöht, je nachdem, ob die Fahrzeug-Soll-Verzögerung $z_{Soll}$ bereits erreicht wurde. Der Hinterachs-Bremsdruck $p_{HA}$ wird in Abhängigkeit des erfassten Ist-Differenzschlupfes $DS_{Ist}$ geregelt. Liegt der Ist-Differenzschlupf $DS_{Ist}$ oberhalb des Soll-Differenzschlupfes $DS_{Soll}$, ist die Hinterachse HA relativ zur Vorderachse VA überbremst, so dass der Hinterachs-Bremsdruck $p_{HA}$ gehalten und der Vorderachs-Bremsdruck $p_{VA}$ erhöht wird. Verschiebt sich der Ist-Differenzschlupf $DS_{Ist}$ unter den Soll-Differenzschlupf $DS_{Soll}$, ist die Hinterachse HA unterbremst und es wird ein Erhöhen des Hinterachs-Bremsdruckes $p_{HA}$ angefordert. Ist bei Erreichen des Punktes P2 der Ist-Differenzschlupf $DS_{Ist}$ bereits geringer als der Soll-Differenzschlupf $DS_{Soll}$, werden sowohl der Hinterachs-Bremsdruck $p_{HA}$ als auch der Vorderachs-Bremsdruck $p_{VA}$ erhöht.

Durch diese Maßnahmen wird das Fahrzeug 200 derartig verzögert, dass der Punkt P3 erreicht wird, der auf der Maximalverzögerungs-Kennlinie $z_{Kmax}$ liegt, so dass sowohl der Hinterachs-Bremsdruck $p_{HA}$ als auch der Vorderachs-Bremsdruck $p_{VA}$ wieder limitiert werden. Bei einem weiteren Erhöhen der Betätigung des Bremspedals wird Punkt P4 erreicht, bei dem sich das Verfahren wie in Punkt P2 wiederholt.

Löst der Fahrer beispielsweise nach einem Einbremsvorgang im Punkt P5 das Bremspedal ein wenig, so verschiebt sich die Bremssituation gemäß Fig. 7b zu Punkt P6, der oberhalb der oberen Toleranz $z^u_T$ liegt, d. h. ein Erhöhen des Vorderachs-Bremsdruckes $p_{VA}$ und des Hinterachs-Bremsdruckes $p_{HA}$ ist nicht erlaubt. Ist der erfasste Ist-Differenzschlupf an diesem Punkt P6 $DS_{Ist}$ kleiner als der Soll-Differenzschlupf $DS_{Soll}$, wird der Hinterachs-Bremsdruck $p_{HA}$ zunächst gehalten und der Vorderachs-Bremsdruck $p_{VA}$ gemäß der durch den Fahrer vorgegebenen Fahrzeug-Soll-Verzögerung $z_{Soll}$ abgesenkt, um das Unterbremsen der Hinterachse HA relativ zur Vorderachse VA auszugleichen. Ist der Ist-Differenzschlupf $DS_{Ist}$ im Punkt P6 größer als der Soll-Differenzschlupf $DS_{Soll}$, wird sowohl der Vorderachs-Bremsdruck $p_{VA}$ als auch der Hinterachs-Bremsdruck $p_{HA}$ gesenkt, um dem Fahrerwunsch zu entsprechen, bis der Ist-Differenzschlupf $DS_{Ist}$ innerhalb der Toleranz $D_T$ wieder dem Soll-Differenzschlupf $DS_{Soll}$ entspricht.

Durch diese Maßnahmen verschiebt sich die Bremssituation von Punkt P6 zu Punkt P7, an dem sich zum Erreichen des Punktes P8 die oben beschriebenen Maßnahmen wiederholen, falls der Fahrer das Bremspedal weiter löst, d. h. die Fahrzeug-Soll-Verzögerung $z_{Soll}$ selbst aktiv verringert.

Bei einem Wechsel von einem Einbremsvorgang zu einem Ausbremsvorgang kann zum Drucksenken einmalig eine längere Ansteuerzeit der Auslassventile 12, 14, 22, 24 gewählt werden und bei einem Wechsel von einem Ausbremsvorgang zu einem Einbremsvorgang zum Druckerhöhen einmalig eine längere Ansteuerzeit der Einlassventile 11, 13, 21, 23, um ein Hystereseverhalten bei der Umkehr der Bremswirkungen einer Bremse zu überwinden.

Bezugszeichenliste (Bestandteil der Beschreibung)

| | |
|---|---|
| 1, 2 | Hinterräder |
| 3, 4 | Vorderräder |
| 5, 6 | hintere Radbremsen |
| 7, 8 | vordere Radbremsen |
| 9.1 | Bremszylinder |
| 9.2 | zweikreisiges Bremsventil |
| 9.3 | Drucksensor/Bremswertgeber |
| 10 | ABS-Steuereinrichtung |
| 11, 13 | ABS-Einlassventile hintere Radbremsen 5, 6 |
| 12, 14 | ABS-Auslassventile hintere Radbremsen 5, 6 |
| 15 | FV-Steuereinrichtung |
| 21, 23 | ABS-Einlassventile vordere Radbremsen 7, 8 |
| 22, 24 | ABS-Auslassventile vordere Radbremsen 7, 8 |
| 100 | Bremssystem |
| 101 | EBS-Steuereinrichtung |
| 200 | Fahrzeug |

| | |
|---|---|
| B1, B2, B3 | erster, zweiter und dritter Bereich |
| DSR | Differenzschlupfregelung |
| $DS_{Ist}$ | Ist-Differenzschlupf |
| $DS_{Soll}$ | Soll-Bremsschlupf |
| $DS_{Off}$ | Offset-Differenzschlupf |
| $DS_{HA}$ | Hinterachs-Bremsschlupf |
| $DS_{VA}$ | Vorderachs-Bremsschlupf |
| $DS_T$ | Toleranzwert Differenzschlupf |

13

| HA | Hinterachse |
|---|---|
| p | Bremsdruck |
| $p_{VA}$ | Vorderachs-Bremsdruck |
| $p_{HA}$ | Hinterachs-Bremsdruck |
| VA | Vorderachse |
| $v_{VA}$ | Drehgeschwindigkeit Vorderachse VA |
| $v_{HA}$ | Drehgeschwindigkeit Hinterachse HA |
| $z_{Kmax}$ | Maximalverzögerungs-Kennlinie |
| $z_{Kmin}$ | Minimalverzögerungs-Kennlinie |
| $z_{max}$ | Maximalverzögerung |
| $z_{min}$ | Minimalverzögerung |
| $z_{Soll}$ | Fahrzeug-Soll-Verzögerung |
| $z_{Ist}$ | Fahrzeug-Ist-Verzögerung |
| $z^u_T$ | obere Toleranz (Fahrzeugverzögerung) |
| $z^l_T$ | untere Toleranz (Fahrzeugverzögerung) |

**Patentansprüche**

1. Verfahren zum Regeln einer Fahrzeugverzögerung in einem Fahrzeug (200) mit einem ABS-Bremssystem (100), mit mindestens den folgenden Schritten:

Erfassen einer vom Fahrer vorgegebenen Fahrzeug-Soll-Verzögerung ($z_{Soll}$) (St1),
Festlegen einer Maximalverzögerung ($z_{max}$) sowie einer Minimalverzögerung ($z_{min}$) jeweils in Abhängigkeit der erfassten Fahrzeug-Soll-Verzögerung ($z_{Soll}$) (St3),
Erfassen einer Fahrzeug-Ist-Verzögerung ($z_{Ist}$) (St4) und
Regeln eines Bremsdruckes ($p_{HA}$, $p_{VA}$) an Radbremsen (5, 6, 7, 8) einer ersten und einer zweiten Fahrzeugachse (HA, VA) in Abhängigkeit der erfassten Fahrzeug-Ist-Verzögerung ($z_{Ist}$) durch Ansteuern von ABS-Bremsventilen (11, 12, 13, 14, 21, 22, 23, 24) derartig, dass

- der Bremsdruck ($p_{HA}$, $p_{VA}$) an den Radbremsen (5, 6, 7, 8) der ersten und der zweiten Fahrzeugachse (HA, VA) erhöht wird, wenn die Fahrzeug-Ist-Verzögerung ($z_{Ist}$) kleiner ist als die Minimalverzögerung ($z_{min}$) zum Erreichen einer Mindest-Bremswirkung (St6.1), und
- der Bremsdruck ($p_{HA}$, $p_{VA}$) an den Radbremsen (5, 6, 7, 8) der ersten und der zweiten Fahrzeugachse (HA, VA) limitiert wird, wenn die Fahrzeug-Ist-Verzögerung ($z_{Ist}$) größer ist als die Maximalverzögerung ($z_{max}$) zum Limitieren der Bremswirkung der ersten und der zweiten Fahrzeugachse (HA, VA) (St6.5, St6.6, St6.7), und
- der Bremsdruck ($p_{HA}$, $p_{VA}$) an den Radbremsen (5, 6, 7, 8) der zweiten Fahrzeugachse (HA, VA) zusätzlich in Abhängigkeit eines erfassten Ist-Differenzschlupfes ($DS_{Ist}$) geregelt wird, wenn die Fahrzeug-Ist-Verzögerung ($z_{Ist}$) kleiner als die Maximalverzögerung ($z_{max}$) und größer als die Minimalverzögerung ($z_{min}$) ist, wobei der Ist-Differenzschlupf ($DS_{Ist}$) den Unterschied in einem Drehverhalten der ersten Fahrzeugachse (HA, VA) zur zweiten Fahrzeugachse (VA, HA) angibt (St.6.2).

2. Verfahren nach Anspruch 1, **dadurch gekennzeichnet, dass** die Maximalverzögerung ($z_{max}$) anhand einer Maximalverzögerungs-Kennlinie ($z_{Kmax}$) und die Minimalverzögerung ($z_{min}$) anhand einer Minimalverzögerungs-Kennlinie ($z_{Kmin}$) festgelegt werden, die jeweils eine Abhängigkeit der Maximalverzögerung ($z_{max}$) bzw. Minimalverzögerung ($z_{min}$) von der Fahrzeug-Soll-Verzögerung ($z_{Soll}$) darstellen.

3. Verfahren nach Anspruch 2, **dadurch gekennzeichnet, dass** die Maximalverzögerungs-Kennlinie ($z_{Kmax}$) abhängig von einer Beladung des Fahrzeuges (200) ist.

4. Verfahren nach Anspruch 3, **dadurch gekennzeichnet, dass** die Beladung des Fahrzeuges (200) mit einem Achslastsensor gemessen wird oder aus dem erfassten Ist-Differenzschlupf ($DS_{Ist}$) hergeleitet wird.

5. Verfahren nach Anspruch 3 oder 4, **dadurch gekennzeichnet, dass** die Maximalverzögerungs-Kennlinie ($z_{Kmax}$) bei geringer Beladung stärker ansteigt, so dass der Bremsdruck ($p_{HA}$, $p_{VA}$) bei geringer Beladung des Fahrzeuges (200) bei höheren erfassten Fahrzeug-Ist-Verzögerungen ($z_{Ist}$) limitiert wird im Gegensatz zu einer hohen Beladung des Fahrzeuges (200).

6. Verfahren nach einem der Ansprüche 2 bis 5, **dadurch gekennzeichnet, dass** die Maximalverzögerungs-Kennlinie ($z_{Kmax}$) einen harmonischen Verlauf ohne Abstufungen aufweist zum Limitieren des Bremsdruckes ($p_{HA}$, $p_{VA}$) ohne das Fahrzeug (200) rückartig zu verzögern.

7. Verfahren nach einem der vorhergehenden Ansprüche, **dadurch gekennzeichnet, dass** der Bremsdruck ($p_{HA}$, $p_{VA}$) an den Radbremsen (5, 6, 7, 8) der ersten Fahrzeugachse (HA, VA)

   - bei einem Einbremsvorgang gehalten oder erhöht wird (St6.3), und
   - bei einem Ausbremsvorgang gehalten oder gesenkt wird (St6.4), wenn die Fahrzeug-Ist-Verzögerung ($z_{Ist}$) kleiner als die Maximalverzögerung ($z_{max}$) und größer als die Minimalverzögerung ($z_{min}$) ist, und

   der Bremsdruck ($p_{HA}$, $p_{VA}$) an den Radbremsen (5, 6, 7, 8) der ersten Fahrzeugachse (HA, VA) bei einem Ausbremsvorgang gehalten oder gesenkt wird, wenn die Fahrzeug-Ist-Verzögerung ($z_{Ist}$) größer ist als die Maximalverzögerung ($z_{max}$) (St6.5, St6.6, St6.7).

8. Verfahren nach Anspruch 7, **dadurch gekennzeichnet, dass** der Bremsdruck ($p_{HA}$, $p_{VA}$) an den Radbremsen (5, 6, 7, 8) der ersten Fahrzeugachse (HA, VA)

   - bei einem Einbremsvorgang zusätzlich verringert wird, wenn die daraus resultierende Fahrzeug-Ist-Verzögerung ($z_{Ist}$) größer ist als die Fahrzeug-Soll-Verzögerung ($z_{Soll}$), und
   - bei einem Ausbremsvorgang zusätzlich erhöht wird, wenn die daraus resultierende Fahrzeug-Ist-Verzögerung ($z_{Ist}$) kleiner ist als die Fahrzeug-Soll-Verzögerung ($z_{Soll}$).

9. Verfahren nach einem der vorhergehenden Ansprüche, **dadurch gekennzeichnet, dass** der Ist-Differenzschlupf ($DS_{Ist}$) berechnet wird aus einer Differenz eines ermittelten Hinterachs-Bremsschlupfes ($DS_{HA}$) minus einem ermittelten Vorderachs-Bremsschlupf ($DS_{VA}$), vorzugsweise normiert auf den Hinterachs-Bremsschlupf ($DS_{HA}$), oder einer Differenz einer ermittelten Vorderachs-Achsgeschwindigkeit ($v_{VA}$) minus einer ermittelten Hinterachs-Achsgeschwindigkeit ($v_{HA}$), vorzugsweise normiert auf die Vorderachs-Achsgeschwindigkeit ($v_{VA}$), wobei die Hinterachse (HA) die durch einen Motor angetriebene Fahrzeugachse ist.

10. Verfahren nach einem der vorherigen Ansprüche, **dadurch gekennzeichnet, dass** der Bremsdruck ($p_{HA}$, $p_{VA}$) an den Radbremsen (5, 6, 7, 8) der zweiten Fahrzeugachse (HA, VA) in Abhängigkeit des Ist-Differenzschlupfes ($DS_{Ist}$) derartig geregelt wird, dass der Ist-Differenzschlupf ($DS_{Ist}$) einem Soll-Differenzschlupf ($DS_{Soll}$) entspricht, wobei der Bremsdruck ($p_{HA}$, $p_{VA}$) an den Radbremsen (5, 6, 7, 8) der zweiten Fahrzeugachse (HA, VA) dazu

   - limitiert wird, wenn die zweite Fahrzeugachse (HA, VA) relativ zu der ersten Fahrzeugachse (VA, HA) überbremst ist (St101.1), und
   - erhöht wird, wenn die zweite Fahrzeugachse (HA, VA) relativ zu der ersten Fahrzeugachse (VA, HA) unterbremst ist (St101.2).

11. Verfahren nach Anspruch 10, **dadurch gekennzeichnet, dass** der Soll-Differenzschlupf ($DS_{Soll}$) abhängig von der erfassten Fahrzeug-Ist-Verzögerung ($z_{Ist}$) oder der Fahrzeug-Soll-Verzögerung ($z_{Soll}$) ist, wobei sich der Soll-Differenzschlupf ($DS_{Soll}$) bei steigender Fahrzeug-Ist-Verzögerung ($z_{Ist}$) oder steigender Fahrzeug-Soll-Verzögerung ($z_{Soll}$) in Richtung eines synchronen Raddrehverhaltens der Räder (1, 2, 3, 4) der ersten Fahrzeugachse (HA, VA) und der zweiten Fahrzeugachse (HA, VA) verringert, so dass der Bremsdruck ($p_{HA}$, $p_{VA}$) an der zweiten Fahrzeugachse (HA, VA) bereits bei einem geringeren relativen Überbremsen limitiert wird.

12. Verfahren nach einem der vorherigen Ansprüche, **dadurch gekennzeichnet, dass** der Bremsdruck ($p_{HA}$, $p_{VA}$) an den Radbremsen (5, 6, 7, 8) der zweiten Fahrzeugachse (HA, VA) in Abhängigkeit des Ist-Differenzschlupfes ($DS_{Ist}$) verringert wird, wenn die Fahrzeug-Ist-Verzögerung ($z_{Ist}$) größer ist als die Maximalverzögerung ($z_{max}$) und die zweite Fahrzeugachse (HA, VA) relativ zur ersten Fahrzeugachse (VA, HA) überbremst ist (St6.7).

13. Verfahren nach einem der Ansprüche 10 bis 12, **dadurch gekennzeichnet, dass**, falls die zweite Fahrzeugachse die Hinterachse (HA) ist, der Bremsdruck ($p_{HA}$, $p_{VA}$) an hinteren Radbremsen (5, 6)

   - limitiert wird, wenn der Ist-Differenzschlupf ($DS_{Ist}$) größer ist als der Soll-Differenzschlupf ($DS_{Soll}$), und
   - erhöht wird, wenn der Ist-Differenzschlupf ($DS_{Ist}$) kleiner ist als der Soll-Differenzschlupf ($DS_{Soll}$), und

   falls die zweite Fahrzeugachse die Vorderachse (VA) ist, der Bremsdruck ($p_{HA}$, $p_{VA}$) an vorderen Radbremsen (5, 6)

- limitiert wird, wenn der Ist-Differenzschlupf ($DS_{Ist}$) kleiner ist als der Soll-Differenzschlupf ($DS_{Soll}$), und
- erhöht wird, wenn der Ist-Differenzschlupf ($DS_{Ist}$) größer ist als der Soll-Differenzschlupf ($DS_{Soll}$).

**14.** Verfahren nach einem der vorherigen Ansprüche, **dadurch gekennzeichnet, dass** die zweite Fahrzeugachse eine Hinterachse (HA) des Fahrzeuges (200) und die erste Fahrzeugachse eine Vorderachse (VA) des Fahrzeuges (200) ist.

**15.** Verfahren nach einem der vorherigen Ansprüche, **dadurch gekennzeichnet, dass** bei einem Limitieren des Bremsdruckes ($p_{HA}$, $p_{VA}$) an den Radbremsen (5, 6, 7, 8) der ersten oder der zweiten Fahrzeugachse (HA, VA) der Bremsdruck ($p_{HA}$, $p_{VA}$) lediglich gehalten oder verringert und nicht erhöht wird.

**16.** Vorrichtung (15) zum elektronischen Regeln einer Fahrzeugverzögerung in einem Fahrzeug (200) mit einem ABS-Bremssystem (100), insbesondere zur Durchführung eines Verfahrens nach einem der vorhergehenden Ansprüche, wobei die Vorrichtung (15) ausgebildet ist,
eine Maximalverzögerung ($z_{max}$) und eine Minimalverzögerung ($z_{min}$) in Abhängigkeit einer erfassten Fahrzeug-Soll-Verzögerung ($z_{Soll}$) auszuwählen, und
ABS-Bremsventile (11, 12, 13, 14, 21, 22, 23, 24) an Radbremsen (5, 6, 7, 8) einer ersten und einer zweiten Fahrzeugachse (HA, VA) derartig in Abhängigkeit einer erfassten Fahrzeug-Ist-Verzögerung ($z_{Ist}$) anzusteuern, dass

- der Bremsdruck ($p_{HA}$, $p_{VA}$) an den Radbremsen (5, 6, 7, 8) der ersten und der zweiten Fahrzeugachse (HA, VA) erhöht wird, wenn die Fahrzeug-Ist-Verzögerung ($z_{Ist}$) kleiner ist als die Minimalverzögerung ($z_{min}$) zum Erreichen einer Mindest-Bremswirkung, und
- der Bremsdruck ($p_{HA}$, $p_{VA}$) an den Radbremsen (5, 6, 7, 8) der ersten und der zweiten Fahrzeugachse (HA, VA) limitiert wird, wenn die Fahrzeug-Ist-Verzögerung ($z_{Ist}$) größer ist als die Maximalverzögerung ($z_{max}$) zum Begrenzen der Bremswirkung der ersten und der zweiten Fahrzeugachse (HA, VA), und
- der Bremsdruck ($p_{HA}$, $p_{VA}$) an den Radbremsen (5, 6, 7, 8) der zweiten Fahrzeugachse (HA, VA) in Abhängigkeit eines erfassten Ist-Differenzschlupfes ($DS_{Ist}$) geregelt wird, wenn die Fahrzeug-Ist-Verzögerung ($z_{Ist}$) kleiner ist als die Maximalverzögerung ($z_{max}$) und größer als die Minimalverzögerung ($z_{min}$), wobei der Ist-Differenzschlupf ($DS_{Ist}$) den Unterschied in einem Drehverhalten der ersten Fahrzeugachse (HA, VA) zur zweiten Fahrzeugachse (VA, HA) angibt.

**17.** Vorrichtung nach Anspruch 16, **dadurch gekennzeichnet, dass** die zweite Fahrzeugachse eine Hinterachse (HA) und die erste Fahrzeugachse (HA, VA) eine Vorderachse (VA) des Fahrzeuges (200) ist.

**18.** Fahrzeug (200) mit einem Bremssystem (100), mindestens aufweisend:

ein Bremsventil (9.2) zum Aussteuern eines Bremsdruckes ($p_{HA}$, $p_{VA}$) an Radbremsen (5, 6, 7, 8) des Fahrzeuges (200),
einen Bremswertgeber (9.3) zum Erfassen einer Fahrzeug-Soll-Verzögerung ($z_{Soll}$),
Mittel zum Erfassen einer Fahrzeug-Ist-Verzögerung (zist),
ABS-Bremsventile (11, 12, 13, 14, 21, 22, 23, 24), sowie eine Vorrichtung (15) nach einem der Ansprüche 16 oder 17, insbesondere zur Durchführung des Verfahrens nach einem der Ansprüche 1 bis 15.

**Claims**

**1.** Method for controlling deceleration of a vehicle (200) with an ABS brake system (100), having at least the following steps:

detecting a vehicle setpoint deceleration ($z_{Soll}$) (St1) which is prescribed by the driver,
defining a maximum deceleration ($z_{max}$) and a minimum deceleration ($z_{min}$), each as a function of the detected vehicle setpoint deceleration ($z_{Soll}$) (St3),
detecting a vehicle actual deceleration ($z_{Ist}$) (St4) and
controlling a brake pressure ($p_{HA}$, $p_{VA}$) at wheel brakes (5, 6, 7, 8) of a first and of a second vehicle axle (HA, VA) as a function of the detected vehicle actual deceleration ($z_{Ist}$) by actuating ABS brake valves (11, 12, 13, 14, 21, 22, 23, 24) in such a way that

- the brake pressure ($p_{HA}$, $p_{VA}$) at the wheel brakes (5, 6, 7, 8) of the first and second vehicle axles (HA, VA) is increased if the vehicle actual deceleration ($z_{Ist}$) is smaller than the minimum deceleration ($z_{min}$) in order to bring about a minimum braking effect (St6.1), and

- the brake pressure ($p_{HA}$, $p_{VA}$) at the wheel brakes (5, 6, 7, 8) of the first and second vehicle axles (HA, VA) is limited if the vehicle actual deceleration ($z_{Ist}$) is greater than the maximum deceleration ($z_{max}$) in order to limit the braking effect of the first and second vehicle axles (HA, VA) (St6.5, St6.6, St6.7), and

- the brake pressure ($p_{HA}$, $p_{VA}$) at the wheel brakes (5, 6, 7, 8) of the second vehicle axle (HA, VA) is additionally controlled as a function of a detected actual difference slip ($DS_{Ist}$) if the vehicle actual deceleration ($z_{Ist}$) is smaller than the maximum deceleration ($z_{max}$) and greater than the minimum deceleration ($z_{min}$), wherein the actual difference slip ($DS_{Ist}$) specifies the difference in the rotational behaviour of the first vehicle axle (HA, VA) with respect to the second vehicle axle (VA, HA) (St6.2).

2. Method according to Claim 1, **characterized in that** the maximum deceleration ($z_{max}$) is defined on the basis of a maximum deceleration characteristic curve ($z_{Kmax}$) and the minimum deceleration ($z_{min}$) is defined on the basis of a minimum deceleration characteristic curve ($z_{Kmin}$), which each represent a dependence of the maximum deceleration ($z_{max}$) or minimum deceleration ($z_{min}$) on the vehicle setpoint deceleration ($z_{Soll}$).

3. Method according to Claim 2, **characterized in that** the maximum deceleration characteristic curve ($z_{Kmax}$) is dependent on a load of the vehicle (200).

4. Method according to Claim 3, **characterized in that** the load of the vehicle (200) is measured with an axle load sensor or is derived from the detected actual difference slip ($DS_{Ist}$).

5. Method according to Claim 3 or 4, **characterized in that** the maximum deceleration characteristic curve ($z_{Kmax}$) in the case of a low load increases relatively steeply so that in the case of a low load of the vehicle (200) the brake pressure ($p_{HA}$, $p_{VA}$) is limited in the case of relatively high detected vehicle actual decelerations ($z_{Ist}$), in contrast to a high load of the vehicle (200).

6. Method according to one of Claims 2 to 5, **characterized in that** the maximum deceleration characteristic curve ($z_{Kmax}$) has a harmonic profile without steps in order to limit the brake pressure ($p_{HA}$, $p_{VA}$) without decelerating the vehicle (200) in a jolting fashion.

7. Method according to one of the preceding claims, **characterized in that** the brake pressure ($p_{HA}$, $p_{VA}$) at the wheel brakes (5, 6, 7, 8) of the first vehicle axle (HA, VA)

- is maintained or increased (St6.3) in the case of a brake-application process, and
- is maintained or decreased (St6.4) in the case of a brake-release process,
if the vehicle actual deceleration ($z_{Ist}$) is smaller than the maximum deceleration ($z_{max}$) and greater than the minimum deceleration ($z_{min}$), and the brake pressure ($p_{HA}$, $p_{VA}$) at the wheel brakes (5, 6, 7, 8) of the first vehicle axle (HA, VA) is maintained or decreased in the case of a brake-release process if the vehicle actual deceleration ($z_{Ist}$) is greater than the maximum deceleration ($z_{max}$) (St6.5, St6.6, St6.7).

8. Method according to Claim 7, **characterized in that** the brake pressure ($p_{HA}$, $p_{VA}$) at the wheel brakes (5, 6, 7, 8) of the first vehicle axle (HA, VA)

- is additionally reduced in the case of a brake-application process if the resulting vehicle actual deceleration ($z_{Ist}$) is greater than the vehicle setpoint deceleration ($z_{Soll}$), and
- is additionally increased in the case of a brake-release process if the resulting vehicle actual deceleration ($z_{Ist}$) is smaller than the vehicle setpoint deceleration ($z_{Soll}$).

9. Method according to one of the preceding claims, **characterized in that** the actual difference slip ($DS_{Ist}$) is calculated from a difference of a determined rear-axle brake slip ($DS_{HA}$) minus a determined front-axle brake slip ($DS_{VA}$), preferably standardized to the rear-axle brake slip ($DS_{HA}$), or a difference between a determined front-axle axle speed ($v_{VA}$) minus a determined rear-axle axle speed ($V_{HA}$), preferably standardized to the front-axle axle speed ($v_{VA}$),
wherein the rear axle (HA) is the vehicle axle which is driven by an engine or motor.

10. Method according to one of the preceding claims, **characterized in that** the brake pressure ($p_{HA}$, $p_{VA}$) at the wheel brakes (5, 6, 7, 8) of the second vehicle axle (HA, VA) is controlled as a function of the actual difference slip ($DS_{Ist}$) in such a way that the actual difference slip ($DS_{Ist}$) corresponds to a setpoint difference slip ($DS_{Soll}$), wherein the brake pressure ($p_{HA}$, $p_{VA}$) at the wheel brakes (5, 6, 7, 8) of the second vehicle axle (HA, VA)

    - is limited if the second vehicle axle (HA, VA) is over-braked (St101.1) relative to the first vehicle axle (VA, HA), and
    - is increased if the second vehicle axle (HA, VA) is under-braked (St101.2) relative to the first vehicle axle (VA, HA).

11. Method according to Claim 10, **characterized in that** the setpoint difference slip ($DS_{Soll}$) is dependent on the detected vehicle actual deceleration ($z_{Ist}$) or the vehicle setpoint deceleration ($z_{Soll}$), wherein in the case of an increasing vehicle actual deceleration ($z_{Ist}$) or increasing vehicle setpoint deceleration ($z_{Soll}$) the setpoint difference slip ($DS_{Soll}$) is decreased in the direction of a synchronous wheel rotational behaviour of the wheels (1, 2, 3, 4) of the first vehicle axle (HA, VA) and of the second vehicle axle (HA, VA), so that the brake pressure ($p_{HA}$, $p_{VA}$) at the second vehicle axle (HA, VA) is already limited in the event of relatively low relative over-braking.

12. Method according to one of the preceding claims, **characterized in that** the brake pressure ($p_{HA}$, $p_{VA}$) at the wheel brakes (5, 6, 7, 8) of the second vehicle axle (HA, VA) is decreased as a function of the actual difference slip ($DS_{Ist}$) if the vehicle actual deceleration ($z_{Ist}$) is greater than the maximum deceleration ($z_{max}$) and the second vehicle axle (HA, VA) is over-braked (St6.7) relative to the first vehicle axle (VA, HA).

13. Method according to one of Claims 10 to 12, **characterized in that** if the second vehicle axle is the rear axle (HA), the brake pressure ($p_{HA}$, $p_{VA}$) at rear wheel brakes (5, 6)

    - is limited if the actual difference pressure ($DS_{Ist}$) is greater than the setpoint difference slip ($DS_{Soll}$), and
    - is increased if the actual difference slip ($DS_{Ist}$) is smaller than the setpoint difference slip ($DS_{Soll}$), and
    if the second vehicle axle is the front axle (VA), the brake pressure ($p_{HA}$, $p_{VA}$) at front wheel brakes (5, 6)
    - is limited if the actual difference slip ($DS_{Ist}$) is smaller than the setpoint difference slip ($DS_{Soll}$), and
    - is increased if the actual difference slip ($DS_{Ist}$) is greater than the setpoint difference slip ($DS_{Soll}$).

14. Method according to one of the preceding claims, **characterized in that** the second vehicle axle is a rear axle (HA) of the vehicle (200) and the first vehicle axle is a front axle (VA) of the vehicle (200) .

15. Method according to one of the preceding claims, **characterized in that** in the case of a limitation of the brake pressure ($p_{HA}$, $p_{VA}$) at the wheel brakes (5, 6, 7, 8) of the first or second vehicle axle (HA, VA), the brake pressure ($p_{HA}$, $p_{VA}$) is merely maintained or decreased and not increased.

16. Device (15) for electronically controlling deceleration of a vehicle (200) with an ABS brake system (100), in particular for carrying out a method according to one of the preceding claims, wherein the device (15) is designed to select a maximum deceleration ($z_{max}$) and a minimum deceleration ($z_{min}$) as a function of a detected vehicle setpoint deceleration ($z_{Soll}$), and
to actuate ABS brake valves (11, 12, 13, 14, 21, 22, 23, 24) at wheel brakes (5, 6, 7, 8) of a first and of a second vehicle axle (HA, VA) as a function of a detected vehicle actual deceleration ($z_{Ist}$) such that

    - the brake pressure ($p_{HA}$, $p_{VA}$) at the wheel brakes (5, 6, 7, 8) of the first and second vehicle axles (HA, VA) is increased if the vehicle actual deceleration ($z_{Ist}$) is smaller than the minimum deceleration ($z_{min}$) in order to bring about a minimum braking effect, and
    - the brake pressure ($p_{HA}$, $p_{VA}$) at the wheel brakes (5, 6, 7, 8) of the first and second vehicle axles (HA, VA) is limited if the vehicle actual deceleration ($z_{Ist}$) is greater than the maximum deceleration ($z_{max}$) in order to limit the braking effect of the first and second vehicle axles (HA, VA), and
    - the brake pressure ($p_{HA}$, $p_{VA}$) at the wheel brakes (5, 6, 7, 8) of the second vehicle axle (HA, VA) is controlled as a function of a detected actual difference slip ($DS_{Ist}$) if the vehicle actual deceleration ($z_{Ist}$) is lower than the maximum deceleration ($z_{max}$) and greater than the minimum deceleration ($z_{min}$), wherein the actual difference slip ($DS_{Ist}$) indicates the difference in a rotational behaviour of the first vehicle axles (HA, VA) with respect to the second vehicle axle (VA, HA).

17. Device according to Claim 16, **characterized in that** the second vehicle axle is a rear axle (HA), and the first vehicle axle (HA, VA) is a front axle (VA) of the vehicle (200).

18. Vehicle (200) having a brake system (100), at least comprising:

a brake valve (9.2) for modulating a brake pressure ($p_{HA}$, $p_{VA}$) at wheel brakes (5, 6, 7, 8) of the vehicle (200),
a brake value transmitter (9.3) for detecting a vehicle setpoint deceleration ($z_{Soll}$),
means for detecting a vehicle actual deceleration ($z_{Ist}$),
ABS brake valves (11, 12, 13, 14, 21, 22, 23, 24) and
a device (15) according to one of Claims 16 and 17, in particular for carrying out the method according to one of Claims 1 to 15.

**Revendications**

1. Procédé de régulation d'un ralentissement de véhicule dans un véhicule (200) équipé d'un système de freinage ABS (100), comprenant au moins les étapes suivantes :

détecter un ralentissement de consigne de véhicule ($z_{Soll}$) (St1) spécifié par le conducteur,
fixer un ralentissement maximal ($z_{max}$) et un ralentissement minimal ($z_{min}$) respectivement en fonction du ralentissement de consigne de véhicule détecté ($z_{Soll}$) (St3),
détecter un ralentissement réel de véhicule ($z_{Ist}$) (St4) et réguler une pression de freinage ($p_{HA}$, $p_{VA}$) au niveau des freins de roue (5, 6, 7, 8) d'un premier et d'un deuxième essieu de véhicule (HA, VA) en fonction du ralentissement réel de véhicule détecté ($z_{Ist}$) par commande des soupapes de frein ABS (11, 12, 13, 14, 21, 22, 23, 24) de manière

- à augmenter la pression de freinage ($p_{HA}$, $p_{VA}$) au niveau des freins de roue (5, 6, 7, 8) du premier et du deuxième essieu de véhicule (HA, VA) lorsque le ralentissement réel de véhicule ($z_{Ist}$) est inférieur au ralentissement minimal ($z_{min}$) pour atteindre un effet de freinage minimal (St6.1), et
- à limiter la pression de freinage ($p_{HA}$, $p_{VA}$) au niveau des freins de roue (5, 6, 7, 8) du premier et du deuxième essieu de véhicule (HA, VA) lorsque le ralentissement réel de véhicule ($z_{Ist}$) est supérieur au ralentissement maximal ($z_{max}$) pour limiter l'effet de freinage du premier et du deuxième essieu de véhicule (HA, VA) (St6.5, St6.6, St6.7), et
- à réguler en outre la pression de freinage ($p_{HA}$, $p_{VA}$) au niveau des freins de roue (5, 6, 7, 8) du deuxième essieu de véhicule (HA, VA) en fonction d'un glissement différentiel réel détecté ($DS_{Ist}$) lorsque le ralentissement réel de véhicule ($z_{Ist}$) est inférieur au ralentissement maximal ($z_{max}$) et supérieur au ralentissement minimal ($z_{min}$), dans lequel le glissement différentiel réel ($DS_{Ist}$) indique (St.6.2) la différence de comportement en rotation du premier essieu de véhicule (HA, VA) par rapport au deuxième essieu de véhicule (VA, HA) .

2. Procédé selon la revendication 1, **caractérisé en ce que** le ralentissement maximal ($z_{max}$) est déterminé sur la base d'une caractéristique de ralentissement maximal ($z_{Kmax}$) et le ralentissement minimal ($z_{min}$) est déterminé sur la base d'une caractéristique de ralentissement minimal ($z_{Kmin}$), qui représentent respectivement une dépendance du ralentissement maximal ($z_{max}$) et du ralentissement minimal ($z_{min}$) par rapport au ralentissement de consigne de véhicule ($z_{Soll}$).

3. Procédé selon la revendication 2, **caractérisé en ce que** la caractéristique de ralentissement maximal ($z_{Kmax}$) dépend d'une charge du véhicule (200).

4. Procédé selon la revendication 3, **caractérisé en ce que** la charge du véhicule (200) est mesurée à l'aide d'un capteur de charge d'essieu ou est déduite du glissement différentiel réel détecté ($DS_{Ist}$).

5. Procédé selon la revendication 3 ou 4, **caractérisé en ce que** la caractéristique de ralentissement maximal ($z_{Kmax}$) augmente plus fortement lorsque la charge est faible, de sorte que la pression de freinage ($p_{HA}$, $p_{VA}$) est limitée lorsque la charge du véhicule (200) est faible, dans le cas de ralentissements réels de véhicule détectés ($z_{Ist}$) plus élevés, par opposition à une charge élevée du véhicule (200).

6. Procédé selon l'une des revendications 2 à 5, **caractérisé en ce que** la caractéristique de ralentissement maximal ($z_{Kmax}$) présente une courbe harmonique sans gradations pour limiter la pression de freinage ($p_{HA}$, $p_{VA}$) sans ralentir de manière discontinue le véhicule (200).

**7.** Procédé selon l'une des revendications précédentes, **caractérisé en ce que** la pression de freinage ($P_{HA}$, $P_{VA}$) au niveau des freins de roue (5, 6, 7, 8) du premier essieu de véhicule (HA, VA)

- est maintenue ou augmentée lors d'un processus de freinage (St6.3), et
- est maintenue ou réduite lors d'un processus de freinage (St6.4),

lorsque le ralentissement réel de véhicule ($z_{Ist}$) est inférieur au ralentissement maximal ($z_{max}$) et supérieur au ralentissement minimal ($z_{min}$), et que la pression de freinage ($p_{HA}$, $p_{VA}$) au niveau des freins de roue (5, 6, 7, 8) du premier essieu de véhicule (HA, VA) est maintenue ou réduite lors d'un processus de freinage lorsque le ralentissement réel de véhicule ($z_{Ist}$) est supérieur au ralentissement maximal ($z_{max}$) (St6.5, St6.6, St6.7).

**8.** Procédé selon la revendication 7, **caractérisé en ce que** la pression de freinage ($p_{HA}$, $p_{VA}$) au niveau des freins de roue (5, 6, 7, 8) du premier essieu de véhicule (HA, VA)

- est en outre réduite lors d'un processus de freinage lorsque le ralentissement réel de véhicule ($z_{Ist}$) qui en résulte est supérieur au ralentissement de consigne de véhicule ($z_{Soll}$), et
- est en outre augmentée lors d'un processus de ralentissement lorsque le ralentissement réel de véhicule ($z_{Ist}$) qui en résulte est inférieur au ralentissement de consigne de véhicule ($Z_{Soll}$).

**9.** Procédé selon l'une des revendications précédentes, **caractérisée en ce que** le glissement différentiel réel ($DS_{Ist}$) est calculé à partir d'une différence entre un glissement de freinage d'essieu arrière déterminé ($DS_{HA}$) moins un glissement de freinage d'essieu avant déterminé ($DS_{VA}$), de préférence normalisée par rapport au glissement de freinage d'essieu arrière ($DS_{HA}$), ou d'une différence entre une vitesse d'essieu avant déterminée ($v_{VA}$) moins une vitesse d'essieu arrière déterminée ($v_{HA}$), de préférence normalisée par rapport à la vitesse de l'essieu avant ($v_{VA}$), dans lequel l'essieu arrière (HA) est l'essieu de véhicule qui est entraîné par un moteur.

**10.** Procédé selon l'une des revendications précédentes, **caractérisé en ce que** la pression de freinage ($p_{HA}$, $p_{VA}$) au niveau des freins de roue (5, 6, 7, 8) du deuxième essieu de véhicule (HA, VA) est régulée en fonction du glissement différentiel réel ($DS_{Ist}$) de manière à ce que le glissement différentiel réel ($DS_{Ist}$) corresponde à un glissement différentiel de consigne ($DS_{Soll}$),

dans lequel la pression de freinage ($p_{HA}$, $p_{VA}$) au niveau des freins de roue (5, 6, 7, 8) du deuxième essieu de véhicule (HA, VA), à cet effet,

- est limitée lorsque le deuxième essieu de véhicule (HA, VA) est en surfreinage (St101.1) par rapport au premier essieu de véhicule (VA, HA), et
- est augmentée lorsque le deuxième essieu de véhicule (HA, VA) est en sous-freinage (St101.2) par rapport au premier essieu de véhicule (VA, HA).

**11.** Procédé selon la revendication 10, **caractérisé en ce que** le glissement différentiel de consigne ($DS_{Soll}$) dépend du ralentissement réel de véhicule détecté ($z_{Ist}$) ou du ralentissement de consigne de véhicule ($z_{Soll}$), dans lequel le glissement différentiel de consigne ($DS_{Soll}$) diminue lorsque le ralentissement réel de véhicule ($z_{Ist}$) augmente ou lorsque le ralentissement de consigne de véhicule ($z_{Soll}$) augmente dans le sens d'un comportement de rotation synchrone des roues (1, 2, 3, 4) du premier essieu de véhicule (HA, VA) et du deuxième essieu de véhicule (HA, VA), de manière à ce que la pression de freinage ($P_{HA}$, $P_{VA}$) au niveau du deuxième essieu de véhicule (HA, VA) soit déjà limitée lors d'un surfreinage relatif inférieur.

**12.** Procédé selon l'une des revendications précédentes, **caractérisé en ce que** la pression de freinage ($P_{HA}$, $P_{VA}$) au niveau des freins de roue (5, 6, 7, 8) du deuxième essieu de véhicule (HA, VA) est réduite en fonction du glissement différentiel réel ($DS_{Ist}$) lorsque le ralentissement réel de véhicule ($z_{Ist}$) est supérieur au ralentissement maximal ($z_{max}$) et que le deuxième essieu de véhicule (HA, VA) est en surfreinage (St6.7) par rapport au premier essieu de véhicule (VA, HA).

**13.** Procédé selon l'une des revendications 10 à 12, **caractérisé en ce que**, dans le cas où le deuxième essieu de véhicule est l'essieu arrière (HA), la pression de freinage ($p_{HA}$, $p_{VA}$) au niveau des freins de roue arrière (5, 6)

- est limitée lorsque le glissement différentiel réel ($DS_{Ist}$) est supérieur au glissement différentiel de consigne ($DS_{Soll}$), et
- est augmentée lorsque le glissement différentiel réel ($DS_{Ist}$) est inférieur au glissement différentiel de consigne ($DS_{Soll}$), et

dans le cas où le deuxième essieu de véhicule est l'essieu avant (VA), la pression de freinage ($p_{HA}$, $p_{VA}$) au niveau des freins de roue avant (5, 6)
- est limitée lorsque le glissement différentiel réel ($DS_{Ist}$) est inférieur au glissement différentiel de consigne ($DS_{Soll}$), et
- est augmentée lorsque le glissement différentiel réel ($DS_{Ist}$) est supérieur au glissement différentiel de consigne ($DS_{Soll}$).

**14.** Procédé selon l'une des revendications précédentes, **caractérisé en ce que** le deuxième essieu de véhicule est un essieu arrière (HA) du véhicule (200) et le premier essieu de véhicule est un essieu avant (VA) du véhicule (200) .

**15.** Procédé selon l'une des revendications précédentes, **caractérisé en ce que** lorsque la pression de freinage ($p_{HA}$, $p_{VA}$) au niveau des freins de roue (5, 6, 7, 8) du premier ou du deuxième essieu de véhicule (HA, VA) est limitée, la pression de freinage ($p_{HA}$, $p_{VA}$) est simplement maintenue ou réduite et n'est pas augmentée.

**16.** Dispositif (15) de régulation électronique d'un ralentissement de véhicule dans un véhicule (200) équipé d'un système de freinage ABS (100), en particulier pour la mise en œuvre d'un procédé selon l'une des revendications précédentes, dans lequel le dispositif (15) est conçu pour sélectionner un ralentissement maximal ($z_{max}$) et un ralentissement minimal ($z_{min}$) en fonction d'un ralentissement de véhicule de consigne détecté ($z_{Soll}$), et pour commander des soupapes de frein ABS (11, 12, 13, 14, 21, 22, 23, 24) au niveau de freins de roue (5, 6, 7, 8) d'un premier et d'un deuxième essieu de véhicule (HA, VA) en fonction d'un ralentissement de véhicule réel détecté ($z_{Ist}$) de manière

- à augmenter la pression de freinage ($p_{HA}$, $p_{VA}$) au niveau des freins de roue (5, 6, 7, 8) du premier et du deuxième essieu de véhicule (HA, VA) lorsque le ralentissement réel de véhicule ($z_{Ist}$) est inférieur au ralentissement minimal ($z_{min}$) pour atteindre un effet de freinage minimal, et
- à limiter la pression de freinage ($p_{HA}$, $p_{VA}$) au niveau des freins de roue (5, 6, 7, 8) du premier et du deuxième essieu de véhicule (HA, VA) lorsque le ralentissement réel de véhicule ($z_{Ist}$) est supérieur au ralentissement maximal ($z_{max}$) pour limiter l'effet de freinage du premier et du deuxième essieu de véhicule (HA, VA), et
- à réguler la pression de freinage ($p_{HA}$, $p_{VA}$) au niveau des freins de roue (5, 6, 7, 8) du deuxième essieu de véhicule (HA, VA) en fonction d'un glissement différentiel réel détecté ($DS_{Ist}$) lorsque le ralentissement réel de véhicule ($z_{Ist}$) est inférieur au ralentissement maximal ($z_{max}$) et supérieur au ralentissement minimal ($z_{min}$), dans lequel le glissement différentiel réel ($DS_{Ist}$) indique la différence de comportement en rotation du premier essieu de véhicule (HA, VA) par rapport au deuxième essieu de véhicule (VA, HA) .

**17.** Dispositif selon la revendication 16, **caractérisé en ce que** le deuxième essieu de véhicule est un essieu arrière (HA) et le premier essieu de véhicule (HA, VA) est un essieu avant (VA) du véhicule (200).

**18.** Véhicule (200) équipé d'un système de freinage (100), comportant au moins :

une soupape de frein (9.2) pour réguler une pression de freinage ($p_{HA}$, $p_{VA}$) au niveau des freins de roue (5, 6, 7, 8) du véhicule (200),
un capteur de valeur de freinage (9. 3) pour détecter un ralentissement de consigne de véhicule ($z_{Soll}$),
des moyens pour détecter un ralentissement réel de véhicule ($z_{Ist}$),
des soupapes de frein ABS (11, 12, 13, 14, 21, 22, 23, 24), et
un dispositif (15) selon l'une des revendications 16 ou 17, en particulier pour mettre en œuvre le procédé selon l'une des revendications 1 à 15.

**Fig. 1**

**Fig. 2**

**Fig. 3**

Fig. 4a

Fig. 4b

EP 3 303 076 B1

# Fig. 5

St6.2

St100

$DS_{Ist} > DS_{Soll}$          $DS_{Ist} = DS_{Soll}$

St101.1

$DS_{Ist} < DS_{Soll}$

$p_{HA}$ limitieren

$p_{HA}$ erhöhen

St101.2

# Fig. 6

Fig. 7a

Fig.7b

**EP 3 303 076 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008009948 B3
- DE 102011118130 B4
- DE 102006045317 A1
- US 20090134698 A1
- DE 102009021685 A1
- DE 102011017018 B3